(19) Europäisches Patentamt

European Patent Office

Office européen des brevets

(11) **EP 1 525 981 B1**

(12) **EUROPÄISCHE PATENTSCHRIFT**

(45) Veröffentlichungstag und Bekanntmachung des
Hinweises auf die Patenterteilung:
**29.11.2006 Patentblatt 2006/48**

(51) Int Cl.:
***B41F 33/00*** *(2006.01)*

(21) Anmeldenummer: **03024427.1**

(22) Anmeldetag: **23.10.2003**

(54) **Farbqualitätsbeurteilung und Farbregelung bei der Farbreproduktion**

Color quality evaluation and inking regulating in color reproduction

Evaluation de la qualité des couleurs et réglage de l'encrage dans la reproduction de couleurs

(84) Benannte Vertragsstaaten:
**CH DE FR GB IT LI**

(43) Veröffentlichungstag der Anmeldung:
**27.04.2005 Patentblatt 2005/17**

(73) Patentinhaber: **Gretag-Macbeth AG**
**8105 Regensdorf (CH)**

(72) Erfinder: **Ott, Hans**
**8105 Regensdorf (CH)**

(74) Vertreter: **Schwabe - Sandmair - Marx**
**Stuntzstrasse 16**
**81677 München (DE)**

(56) Entgegenhaltungen:
**US-A- 4 649 502        US-A- 4 975 862**
**US-A- 5 182 721        US-A- 5 957 049**
**US-A1- 2002 104 457**

**Beschreibung**

Die Erfindung betrifft ein Verfahren zur Beurteilung der Farbqualität in einem Farbreproduktionsprozess gemäss dem Oberbegriff des unabhängigen Anspruchs 1 und ein Verfahren zur Farbregelung in einem Farbreproduktionsprozess gemäss dem Oberbegriff des unabhängigen Anspruchs 3. Im besonderen betrifft die Erfindung die Farbqualitätsbeurteilung und Farbregelung in einem Farbdruckprozess, speziell im Offset-Druck.

Ein z.B. aus US-A 5 182 721 und US-A 6 041 708 bekanntes Verfahren zur Qualitätsbeurteilung und zur Farbregelung im Offsetdruck besteht darin, zusammen mit dem eigentlichen Bild einen Farbmessstreifen zu drucken, welcher eine Anzahl von definierten Farbkontrollelementen mit bekannten Sollfarbwerten enthält. Die Farbwerte der mitgedruckten Farbkontrollelemente werden gemessen und mit den zugehörigen Sollfarbwerten verglichen. Die dabei ermittelten Farbabweichungen dienen als Qualitätsmass und werden auch zur Regelung der Farbgebung der Druckmaschine herangezogen, wobei die Regelung so erfolgt, dass die Gesamtfarbabweichung minimal wird. Diese Minimierung der Gesamtfarbabweichung beschränkt sich dabei auf die gedruckten Farben im Farbmessstreifen. Diese Farben sind jedoch nicht immer repräsentativ für die relevanten Farben des Bildmotivs, so dass die erreichte Farbqualität des Drucks in vielen Fällen nicht optimal ist.

Ein weiter entwickeltes, allgemein mit "Messung im Bild" bezeichnetes und z.B. in US-A 5 957 049 beschriebenes Verfahren beruht darauf, dass das gedruckte Bild selbst farbmetrisch ausgemessen und zur Qualitätsbeurteilung und Farbregelung herangezogen wird. Dabei wird das gedruckte Bild mit einer örtlichen Bildauflösung von z.B. 1 mm * 1 mm abgetastet. Dies erfolgt z.B. mit einem Bildabtaster oder einer elektronischen Kamera. Die Messdaten (Farbwerte der einzelnen Bildpunkte) werden mit den entsprechenden Messdaten eines Referenzdruckes oder mit den Bilddaten aus der Druckvorstufe verglichen. Die dabei gewonnenen Farbabweichungen dienen dann wieder als Qualitätsmass und/oder zur Regelung der Farbgebung, wobei der mittlere Farbfehler über das gesamte Druckbild minimiert wird. Dieses Verfahren ist technisch sehr aufwendig und rechenzeitintensiv, wobei ein besonderes Problem in der örtlich exakten Deckung der Referenzbilddaten mit den Messdaten des zu prüfenden Druckbilds besteht.

Allgemeinstes Ziel der vorliegenden Erfindung ist es daher, ein gattungsgemässes Farbqualitätsbeurteilungsverfahren und ein gattungsgemässes Farbregelungsverfahren dahingehend zu verbessern, dass ein der "Messung im Bild" ebenbürtiges oder zumindest nahekommendes Ergebnis erreicht wird, gegenüber diesem bekannten Verfahren aber ein erheblich geringerer technischer und rechnerischer Aufwand erforderlich ist.

Diese der Erfindung zugrundeliegende allgemeine Aufgabe wird durch die durch die Merkmale des unabhängigen Anspruchs 1 bzw. des unabhängigen Anspruchs 3 gekennzeichneten erfindungsgemässen Farbqualitätsbeurteilungs- bzw. Farbregelungsverfahren gelöst.

Vorteilhafte Ausgestaltungen und Weiterbildungen der erfindungsgemässen Verfahren sind Gegenstand der jeweils abhängigen Ansprüche.

Im folgenden wird die Erfindung anhand der Zeichnung näher erläutert. Es zeigen:

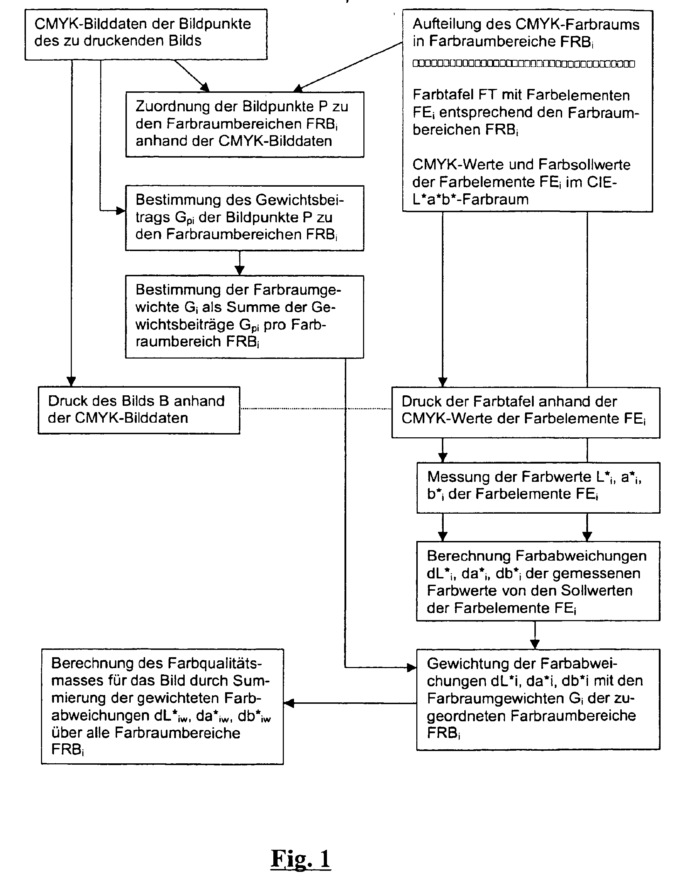

Fig. 1     ein Prinzip-Blockschema eines Ausführungsbeispiels des erfindungsgemässen Farbqualitätsbeurteilungsverfahrens,

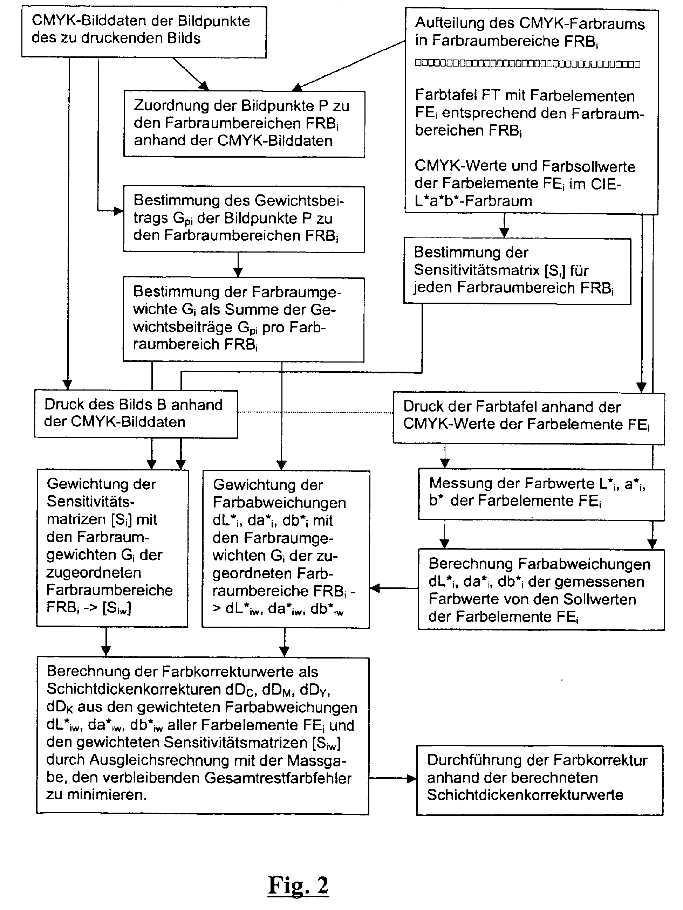

Fig. 2     ein Prinzip-Blockschema eines Ausführungsbeispiels des erfindungsgemässen Farbregelungsverfahrens,

In der nachstehenden Beschreibung und den Ansprüchen werden die verwendeten Abkürzungen und Fachbegriffe wie folgt verstanden:

CIE:          Commission Internationale de l'Eclairage
ISO:          International Standard Organisation
ICC:          International Color Consortium
ANSI:        American National Standards Institute
CGATS:     Committee for Graphic Arts Technologies Standards

RGB-Farbraum: Zum Beispiel für die Farbwiedergabe auf dem Bildschirm und für elektronische Kameras verwendeter Farbraum. Es werden R-G-B-(Rot, Grün, Blau)-Filtercharakteristiken angewandt.

CIE-L*a*b*-Farbraum: Empfindungsmässig gleichabständiger Farbraum gemäss CIE

CIE-X-Y-Z-Farbraum: Basis für den CIE-L*a*b*-Farbraum

C-M-Y-K-Farbraum: Vierdimensionaler Farbraum, der im Vierfarbendruck durch die Flächendeckungen (Rasterprozentwerte) der vier Druckfarben Cyan (C), Magenta (M), Gelb (Y) und Schwarz (K) definiert ist.

Densitometrischer Farbraum: Zur Messung der optischen Farbdichten. Es werden standardisierte Filtercharakteristiken, z.B. von ISO, verwendet.

Ausgangsfarbraum: Dem jeweiligen Reproduktionsprozess zugrundeliegender Farbraum, beim Vierfarbendruck typischerweise der C-M-Y-K-Farbraum.

Beurteilungsfarbraum: Zur visuellen (und messtechnischen) Farbbeurteilung geeigneter Farbraum, in der Regel der CIE-L\*a\*b\*-Farbraum.

Offsetdruck: Die Tonwerte werden durch Rasterung erzeugt. Die Flächendeckung der punktförmigen Rasterung der einzelnen Farben beträgt 0 bis 100 %. Durch Übereinanderdruck der beteiligten Farben werden die Mischfarben erzeugt.

Vierfarbendruck: Alle Farben werden durch die vier Skalenarben Cyan (C), Magenta (M), Gelb (Y) und Schwarz (K) erzeugt.

Mehrfarben- und Sonderfarbendruck: Die Farben werden durch eine beliebige Zahl von Skalenfarben und Sonderfarben erzeugt. Diese können auch übereinander gedruckt sein.

Druckkontrollelemente: Gleichmässig bedruckte Flächenelemente mit den Abmessungen von z.B. 5 mm \* 5mm, die zum visuellen Farbvergleich und zur Farbmessung mit handelsüblichen Densitometern, Dreibereichs-Farbmessgeräten oder spektral messenden Farbmessgeräten geeignet sind. Typische Druckkontrollelemente sind:

Volltonmesselement: Eine Farbe mit 100 % Flächendeckung. Überdruck von 2 oder 3 Buntfarben mit je 100 % Flächendeckung.

Raster-Messelement: Eine Farbe mit z.B. 40 % oder 80 % Flächendeckung.

Gaubalance-Element: Übereinanderdruck von Cyan, Magenta und Gelb mit je ca. 40 % Flächendeckung.

Farbmessstreifen, Druckkontrollstreifen: Streifenförmige (lineare) Anordnung mehrerer Druckkontrollelemente.

Bild: Beliebig grosse grafische Darstellung aus einem oder mehreren Bildern (Motiven) und grafischen Elementen, die als ganze qualitativ erfasst und deren Farben optimal dargestellt werden sollen. Im Offsetdruck entspricht dies dem Inhalt der Druckplatten.

Farbelemente: Homogen gefärbte Flächenelemente mit den Abmessungen von z.B. 5 mm \* 5mm, die zum visuellen oder farbmetrischen Farbvergleich geeignet sind.

Testelemente: Generische Bezeichnung für Druckkontrollelemente und Farbelemente.

Farbtafel: In der Regel zweidimensionale Anordnung von unterschiedlichen Farbelementen. Die Anzahl der Farbelemente beträgt ca. 100 bis 1000. Eine Farbtafel soll alle wichtigen, das Bild bestimmenden Farben genügend fein abgestuft enthalten. Es gibt auch standardisierte Farbtafeln, z.B. von ANSI: IT8.7/3 oder ISO: 12642.

Testelementanordnung: Generische Bezeichnung für Farbmessstreifen, Druckkontrollstreifen und Farbtafeln. Umfasst sowohl streifenförmige (eindimensionale) als auch zweidimensionale Aneinanderreihungen von unterschiedlichen Testelementen, einschliesslich Mischungen von Druckkontrollelementen und Farbelementen.

ICC Profile: Interpolationstabellen, die z.B. die Beziehung zwischen CMYK-Rasterwerten und CIE-L\*a\*b\*-Farbwerten für den ganzen Farbraum beschreiben. Das Datenformat ist durch ICC standardisiert.

Farbraumtransformation: Mit Hilfe der ICC-Profile können Farbwerte von einem Farbraum in einen anderen Farbraum umgerechnet werden, z.B. vom CMYK-Farbraum in den CIE-L\*a\*b\*-Farbraum und von diesem z.B. in den RGB-Farbraum.

Farbmessstreifenabtaster: Mechanisch bewegtes Messgerät, z.B. Densitometer oder Spektralphotometer, zur Messung der Druckkontrollelemente eines Farbmessstreifens.

Farbtafelabtaster: Mechanisch bewegtes Messgerät, z.B. Densitometer oder Spektralphotometer, zur Messung der Farbelemente einer Farbtafel.

Bildabtaster: Mechanisch bewegtes Messgerät, z.B. RGB-Messgerät, Densitometer oder Spektralphotometer, zur Messung aller Bildelemente (Pixel) mit einer definierten örtlichen Bildauflösung. Die Messung kann mit RGB- oder densitometrischer spektraler Charakteristik oder spektral erfolgen.

RGB-Kamera: Elektronische Kamera mit spektraler RGB-Charakteristik. Erzeugt entsprechend ihrer örtlichen Auflösung für jeden Bildpunkt RGB-Messwerte.

Spektrale Kamera: Elektronische Kamera mit spektraler Charakteristik, z.B 16 Spektralbereiche mit je 20 nm Bandbreite, die den Wellenlängenbereich von 400 nm bis 700 nm abdecken. Erzeugt entsprechend ihrer örtlichen Auflösung für jeden Bildpunkt Spektralmesswerte, aus denen für beliebige Farbräume die Farbmesswerte berechnet werden können.

Farbraumbereich: Teil- oder Unterbereich eines Farbraums.

Die Erfindung wird nachstehend am Beispiel des Offset-Farbdrucks beschrieben. Die Erfindung ist jedoch nicht auf den Offset-Druck beschränkt, sondern lässt sich sinngemäss auch für andere Farbdruckprozesse (z.B. Ink Jet) bzw. allgemein Farbreproduktionsprozesse einsetzen.

Ein Kernpunkt der vorliegenden Erfindung besteht darin, dass zusammen mit dem Bild B eine Testelementanordnung FT mitgedruckt (bzw. allgemeiner mitreproduziert) wird, die als Testelemente nicht oder nicht nur die typischen Druckkontrollelemente eines klassischen Druckkontrollstreifens, sondern eine Vielzahl von z.B. 256 unterschiedlichen Farbelementen $FE_i$ enthält, welche den ganzen druckbaren Farbraum oder zumindest die wichtigsten Farben im Bild B abdecken. Alle für die Farbqualitätsbeurteilung bzw. die Farbregelung erforderlichen Farbmessungen werden dann an den Farbelementen $FE_i$ dieser Testelementanordnung durchgeführt, im eigentlichen Bild B selbst wird nicht gemessen.

Soweit ähnelt die Erfindung dem ersten eingangs erwähnten bekannten Verfahren, das mit einem Druckkontrollstreifen arbeitet, wobei allerdings anstelle eines klassischen Druckkontrollstreifens die erwähnte, umfangreichere Testelementanordnung mitgedruckt wird. Bereits dadurch wird gegenüber diesem bekannten Verfahren eine erhebliche Qualitätsverbesserung bei vergleichsweise nur geringem Mehraufwand erreicht.

Um nun auch ohne Messungen im eigentlichen Druckbild zu vergleichbar guten Resultaten zu kommen wie bei der ebenfalls eingangs erwähnten Methode der "Messung im Bild", wird gemäss einem weiteren Kernaspekt der Erfindung eine Gewichtung der an den einzelnen Farbelementen $FE_i$ der Testelementanordnung gemessenen Farbabweichungen durchgeführt. Diese Gewichtung trägt der Bedeutung der einzelnen im Bild B vorkommenden Tonwerte (Farben) Rechnung und projiziert gewissermassen die farbliche Zusammensetzung des Bilds B in die Testelementanordnung FT.

Die Erfindung setzt voraus, dass für das eigentlich zu druckende Bild B Bilddaten in Form von Farbkoordinatenwerten des Ausgangsfarbraums AFR, hier des CMYK-Farbraums vorliegen. Diese CMYK-Bilddaten wurden z.B. in der Druckvorstufe als Grundlage für die Herstellung der Druckplatten erzeugt. (In einem anderen Druckprozess können diese Daten in Form von Koordinaten eines dem Druckprozess angepassten anderen Ausgangsfarbraums vorliegen.)

Die CMYK-Bilddaten liegen im CMYK-Farbraum. In einem ersten Schritt wird nun der gesamte CMYK-Farbraum in eine Anzahl von CMYK-Farbraumbereichen $FRB_i$ unterteilt, die durch die CMYK-Werte ihrer jeweiligen Zentren definiert sind. Die Farbelemente $FE_i$ der Testelementanordnung werden dabei so festgelegt, dass ihre CMYK-Werte im jeweiligen Zentrum der einzelnen Farbraumbereiche liegen. Die Unterteilung des CMYK-Farbraums besteht also de facto in der Wahl einer (den CMYK-Farbraum ausreichend abdeckenden) Testelementanordnung. Für die Erfindung wird ferner vorausgesetzt, dass für die gewählte Testelementanordnung bzw. deren Farbelemente $FE_i$ die zugrundeliegenden CMYK-Werte und die zugehörigen Farbsollwerte bezüglich eines Beurteilungsfarbraums BFR bekannt sind. Typischerweise wird als Beurteilungsfarbraum BFR der CIE-L*a*b*-Farbraum benutzt und die Farbsollwerte sind daher L*a*b*-Farbwerte. Die Farbsollwerte können in an sich bekannter Weise z.B. durch Farbmessung an einem Referenzdruck bestimmt werden. Alternativ können die CIE-L*a*b*-Farbsollwerte auch mittels einer dem Druckprozess entsprechenden Farbraumtransformation der zugrundeliegenden CMYK-Werte zu CIE-L*a*b*-Farbwerten berechnet werden. Auch dies ist an sich bekannt und bedarf deshalb keiner näheren Erläuterung. Aus praktischen Gründen wird jedem Farbraumbereich $FRB_i$ bzw. jedem Farbelement $FE_i$ der Testelementanordnung ein Index i zugeordnet.

Als nächstes wird für alle (oder ausgewählte) Bildpunkte P des Bilds der jeweils zugehörige CMYK-Farbraumbereich bestimmt. Dies kann z.B. dadurch erfolgen, dass der absolute Abstand der CMYK-Werte eines durch einen Index p gekennzeichneten Bildpunkts von den durch die Farbelemente der Testelementanordnung definierten Zentren der Farbraumbereiche bestimmt wird und der Bildpunkt demjenigen Farbraumbereich zugeordnet wird, zu dessen Zentrum der Bildpunkt den geringsten Absolutabstand (im CMYK-Farbraum) aufweist. De facto läuft also die Zuordnung der Bildpunkte zu den Farbraumbereichen auf die Zuordnung der Bildpunkte zu den Farbelementen der Testelementanordnung hinaus.

Der auch als geometrische Rasterabweichung GTVD bezeichnete absolute Abstand eines Bildpunkts P vom Zentrum eines Farbraumbereichs $FRB_i$ berechnet sich wie folgt:

$$GTVD_{pi} = ((C_p\text{-}C_i)^2 + (M_p\text{-}M_i)^2 + (Y_p\text{-}Y_i)^2 (K_p\text{-}K_i)^2)^{0.5} \qquad \text{(Formel 1)}$$

Darin bezeichnet p den Index des betreffenden Bildpunkts und i den Index des jeweiligen Farbraumbereichs bzw. des entsprechenden Farbelements in der Testelementanordnung. C, M, Y und K sind die Rasterwerte des Bildpunkts P bzw. des Farbelements $FE_i$.

Die geometrische Rasterabweichung muss klein genug sein, so dass Änderungen des Tonwertes (gedruckte Flächendeckung) oder Änderungen der Farbschichtdicke ungefähr gleiche Farbwert-Änderungen (CIE- dL*, da*, db*) für alle Bildpunkte bzw. deren CMYK-Werte, die dem gleichen Farbraumbereich zugeordnet sind, bewirken. In anderen Worten, es werden genügend viele Farbraumbereiche benötigt, so dass in jedem Farbraumbereich die Farbabweichungen ausreichend linear zu diesen Änderungen sind. Diese Anforderungen sind ähnlich wie für ICC-Profile. Daher können z.B. auch die IT8.7/3 - Farbtafeldefinitionen mit 928 unterschiedlichen Rasterwertkombinationen verwendet werden.

Zur Qualitätsbeurteilung oder Farbkorrektur müssen die Farbabweichungen oft nur mit einer beschränkten Genauigkeit, z.B. 10%, bekannt sein. Daher ist eine Testelementanordnung mit nur z.B. 256 Farbelementen (CMYK-Rasterwertkombinationen) ebenfalls anwendbar. Die Farbelemente können für diese Testelementanordnung z.B. aus allen Rasterwertkombinationen mit 12.5 %, 37.5 %, 62.5 und 87.5 % aller vier Druckfarben, Cyan, Magenta, Gelb und Schwarz bestehen. Auch der Unterbereich der IT8.7/3 - Farbtafel mit nur 128 Rasterwertkombinationen - ist anwendbar.

Als nächster Schritt folgt ein Gewichtungsprozess, bei dem jedem Farbraumbereich $FRB_i$ bzw. jedem Farbele-

ment $FE_i$ der Testelementanordnung nach noch zu erläutemden Kriterien ein individuelles Farbraumgewicht $G_i$ zugeordnet wird, wobei diese Farbraumgewichte vorzugsweise aber nicht notwendigerweise auf 1 normiert werden (Summe aller Farbraumgewichte = 1). Im folgenden werden die individuellen Farbraumgewichte der Einfachheit halber auch kurz als Gewichte bezeichnet.

Das allgemeine Ziel dieses Gewichtungsprozesses ist es, die danach folgenden Schritte der Farbqualitätsbeurteilung bzw. der Farbregelung des Druckprozesses aufgrund der im eigentlichen zu druckenden Bild vorhandenen Farben zu beeinflussen, wobei gewissermassen die farbliche Zusammensetzung des Bilds in die Testelementanordnung projiziert wird, so dass sich alle Messungen auf die Testelementanordnung beschränken können und im Bild selbst keine Messungen erforderlich sind. Dadurch wird ein zur "Messung im Bild" vergleichbares Resultat erreicht, der dafür erforderliche technische Aufwand bzw. der Rechenaufwand ist gegenüber diesem bekannten Verfahren aber bedeutend geringer.

Der Gewichtungsprozess bzw. die Bestimmung und Zuordnung der individuellen Gewichte zu den einzelnen Farbelementen der Testelementanordnung kann je nach gewünschtem Kriterium vollautomatisch und/oder aufgrund von Benutzer-Eingaben erfolgen. Sie richtet sich auch danach, ob das Ziel letztendlich eine Farbqualitätsbeurteilung oder eine Farbregelung ist; die Kriterien für diese beiden Anwendungsfälle müssen nicht notwendigerweise gleich sein.

Im Zusammenhang mit der Farbqualitätsbeurteilung können z.B. alle Bildpunkte des zu druckenden Bilds herangezogen werden. Pro Bildpunkt P, der (gemäss vorstehender Beschreibung) in einen individuellen Farbraumbereich $FRB_i$ fällt, wird das Gewicht $G_i$ des betreffenden Farbraumbereichs bzw. Farbelements der Testelementanordnung um einen bestimmten Gewichtsbeitrag $G_{pi}$ erhöht. Je mehr Bildpunkte einem Farbraumbereich zugeordnet sind, desto mehr Gewicht erhält dieser Farbraumbereich (Rasterwertkombination) bzw. das zugehörige Farbelement der Testelementanordnung für die Fehlerbeurteilung. Die Gewichte entsprechen somit einer (quantisierten) Häufigkeitsverteilung der im Bild vorkommenden Farben.

Für die Farbregelung (Bestimmung der erforderlichen mittleren Farbkorrektur) können die Gewichte aber auch so gewählt werden, dass die Farbabweichungen einzelner Bildpunkte bzw. Farben nicht oder nicht nur nach ihrer Häufigkeit in die Bewertung eingehen. Dabei können verschiedene Einflussgrössen zu einem Gesamtgewicht pro Farbelement kombiniert und eine Vielzahl von Kriterien kann zur Gewichtung herangezogen werden.

Ein erstes Kriterium kann auf den CMYK-Werten (Rasterwertkombination) der Bildpunkte basieren, z.B. etwa auf dem prozentualen Anteil der schwarzen Druckfarbe an den bunten Druckfarben. Ist dieser Anteil gross, so könnte die Farbe nur durch grosse Veränderung der Buntfarben beeinflusst werden. Für solche Rasterkombinationen kann der Gewichtsbeitrag $G_{pi}$ pro Bildpunkt P entsprechend kleiner gesetzt werden.

Es kann z.B. auch vorteilhaft sein, den Gewichtsbeitrag $G_{pi}$ der Bildpunkte mit einer kleinen gesamten Flächenbedeckung, z.B. < 30 %, auf null zu setzen, sonst werden (in der anschliessenden Auswertung) die Messfehler für die mittlere Farbabweichung unnötig summiert. Zudem ist für solche Bildpunkte der Einfluss der Schichtdickenänderung und daher deren Korrekturvermögen gering.

Ebenfalls kann der Gewichtsbeitrag $G_{pi}$ derjenigen Bildpunkte, die in inhomogenen Bildbereichen liegen, geringer gewählt werden als derjenige der Bildpunkte, die in einem farbhomogenen Bildbereich liegen.

Das Gewicht $G_i$ einzelner Farbraumbereiche bzw. Farbelemente kann begrenzt werden. Sonst kann ein grosser Bildbereich mit homogener Farbe, z.B. ein homogener blauer Himmel, durch das grosse Gewicht dieser Farbraumbereiche die Qualitätsbeurteilung bzw. die Farbkorrektur auf Kosten anderer Bildbereiche übermässig bestimmen.

Auch kann der Benutzer die für die Qualitätsbeurteilung wichtigeren Bildbereiche höher und unwichtigere Bildbereiche geringer bewerten. Dadurch werden durch eine Farbkorrektur die mittleren Farbfehler für die wichtigeren Bildbereiche auf Kosten der Farbfehler der unwichtigeren Bildbereiche minimiert. Praktisch kann dies z.B. so realisiert werden, dass das Bild auf einem Bildschirm dargestellt wird und dem Benutzer eine interaktive Möglichkeit geboten wird, die bildwichtigen Bereiche zu markieren und ev. auch den Grad der Höher- bzw. Minderbewertung einzustellen.

Die CMYK-Werte der Bildpunkte liegen normalerweise nicht exakt im Zentrum eines Farbraumbereichs. Je nach Abstand kann daher der Bildpunkt auch mehreren Farbraumbereichen zugeordnet werden. Die Zuordnung erfolgt dadurch genauer. Vorzugsweise werden für ein 4-Farbensystem die 16 nächstliegenden Farbraumbereiche gewählt und der Gewichtsbeitrag umgekehrt proportional zum Rasterabstand zwischen Bildpunktrasterwert und Zentrumsrasterwert der Farbraumbereiche auf die 16 Farbraumbereiche verteilt. Die verteilte Bildpunktgewichtsumme wird dabei auf den Wert vor der Aufteilung normalisiert.

Wenn nach den vorstehend erläuterten Kriterien jedem Farbelement der Testelementanordnung ein Gewicht $G_i$ zugeordnet worden ist, werden diese Gewichte $G_i$ vorzugsweise auf 1 normalisiert, so dass die Summe aller Gewichte über die gesamte Testelementanordnung resp. das ganze Bild gleich 1 ist. Die normalisierten Gewichte werden auch als relative Gewichte $G_i$ bezeichnet, wobei i der Index des jeweiligen Farbraumbereichs $FRB_i$ bzw. Farbelements $FE_i$ der Testelementanordnung ist.

Nach diesen erfindungswesentlichen vorbereitenden Schritten erfolgen im Prinzip dieselben Schritte, wie sie auch schon bei den eingangs erwähnten bekannten Verfahren zur Farbqualitätsbeurteilung bzw. zur Farbregelung erfolgen. Der wesentliche Unterschied besteht darin, dass die zuvor ermittelten und den einzelnen Farbraumbereichen bzw. den Farbelementen der Testelementanordnung zugeordneten (ggf. relativen) Gewichte in noch zu beschreibender Weise in diese weiteren Schritte mit einbezogen werden.

Das Bild wird zusammen mit der die Farbelemente enthaltenden Testelementanordnung gedruckt. Die gedruckte Testelementanordnung wird mittels eines geeigneten, vorzugsweise örtlich abtastenden Farbmessgeräts farbmetrisch ausgemessen, und die Farbabweichungen $dL_i$, $da_i$, $db_i$, $dE_i$ der Farbelemente $FE_i$ der gedruckten Testelementanordnung gegenüber den Farbsollwerten der Farbelemente $FE_i$ der Testelementanordnung, die den Zentrumsfarbwerten der Farbraumbereiche $FRB_i$ entsprechen, werden aus den gemessenen Farbwerten bestimmt. Im Unterschied zum bekannten Verfahren werden für das Weitere aber nicht diese Farbabweichungen direkt verwendet, sondern vielmehr gewichtete Farbabweichungen $dL_{iw}$, $da_{iw}$, $db_{iw}$, $dE_{iw}$, die sich durch Multiplikation der gemessenen Farbabweichungen $dL^*_i$, $da^*_i$, $db^*_i$, $dE_i$ mit den für den jeweiligen Farbraumbereich $FRB_i$ bzw. das jeweilige Farbelement $FE_i$ zuvor ermittelten Gewicht $G_i$ ergeben:

$$dL_{iw} = G_i * dL^*_i$$
$$da_{iw} = G_i * da^*_i$$
$$db_{iw} = G_i * db^*_i \qquad \text{(Formel 2)}$$
$$dE_{iw} = G_i * dE^*_i$$

Die drei gewichteten Farbabweichungen $dL^*_i$, $da^*_i$, $db^*_i$ werden im folgenden als gewichteter Farbabweichungsvektor ($dF_{iw}$) bezeichnet.

Als Qualitätsmass wird nun durch Summierung über alle N Farbraumbereiche bzw. Farbelemente der Testelementanordnung die mittlere gewichtete Farbabweichung des ganzen Bilds B berechnet:

$$QL = dL_{1w} + dL_{2w} + \ldots dL_{Nw}$$
$$Qa = da_{1w} + da_{2w} + \ldots da_{Nw}$$
$$Qb = db_{1w} + db_{2w} + \ldots db_{Nw} \qquad \text{(Formel 3)}$$
$$QE = dE_{1w} + dE_{2w} + \ldots dE_{Nw}$$

Die Bestimmung des Qualitätsmasses kann auch anhand nur eines Teilbereichs des Bilds erfolgen, indem der interessierende Bildbereich interaktiv durch den Benutzer markiert wird und die vorstehenden Berechnungen nur für diesen Bildbereich durchgeführt werden.

Die Tabellen 1a - 1c zeigen als Beispiel einen nur einige wenige ausgewählte Farbelemente repräsentierenden Ausschnitt aus den Daten einer Bildanalyse. Dabei wurde als Testelementanordnung FT eine 128 Farbelemente umfassende Farbtafel gemäss IT8.7/3 verwendet. Als Beispiel für ein zu druckendes Bild ist das Bild N1A von ISO 300 mit total rund 2.95 Millionen Bildpunkten zugrunde gelegt.

Die Spalten C, M, Y, K zeigen die Rasterprozentwerte (Flächendeckungen) der vier Druckfarben für jedes Farbelement mit dem in der Index-Spalte angegebenen Index. Die Spalten L*, a* b* zeigen die (z.B. durch Messung an einer Referenzfarbtafel gewonnenen) entsprechenden Sollfarbwerte der Farbelemente (Tabelle 1a).

Die Spalte G zeigt die den einzelnen Farbelementen zugeordneten relativen (normierten) Gewichte $G_i$. In diesem Beispiel wurde das normierte Gewicht proportional zur prozentualen Anzahl Bildpunkte pro Farbraumbereich festgelegt. Die Spalten dL*, da*, db* zeigen die an der mitgedruckten Farbtafel gemessenen Farbabweichungen gegenüber den entsprechenden Sollfarbwerten in den Spalten L*, a* und b*. Die Spalte dE* zeigt den gewichteten prozentualen Farbfehler pro Farbraumbereich (Tabelle 1b).

Die Spalten QL, Qa, Qb und QE zeigen die gewichteten Mittelwerte der Farbabweichungen der 128 Farbelemente der Farbtafel (Tabelle 1c). Diese entsprechen dem Qualitätsmass für das ganze Bild.

Tabelle 1a

| Index | G [%] | C [%] | M [%] | Y [%] | K [%] | L* | a* | b* |
|---|---|---|---|---|---|---|---|---|
| 13 | 22.8 | 40 | 40 | 40 | 0 | 61.99 | 1.93 | -1.61 |
| 118 | 12.73 | 40 | 40 | 20 | 0 | 61.94 | 4.73 | -11.07 |
| 124 | 8.969 | 100 | 85 | 85 | 60 | 6.76 | -4.27 | -3.67 |
| 12 | 7.611 | 0 | 40 | 40 | 0 | 73.82 | 22.08 | 11.41 |
| 123 | 7.543 | 100 | 85 | 85 | 80 | 5.16 | -0.45 | -2.95 |
| 128 | 6.495 | 80 | 65 | 65 | 40 | 26.6 | -5.79 | 4.67 |
| 109 | 6.189 | 20 | 40 | 40 | 0 | 66.55 | 12.3 | 6.52 |
| 85 | 6.181 | 70 | 70 | 70 | 0 | 41.45 | 0.55 | 10.13 |
| 113 | 3.448 | 20 | 20 | 20 | 0 | 75.18 | 3.39 | -4.37 |
| 121 | 2.363 | 70 | 40 | 40 | 0 | 53.53 | -13.63 | -9.19 |
| 39 | 1.686 | 3 | 0 | 0 | 0 | 90.65 | 0.19 | -8.65 |
| 114 | 0 | 100 | 70 | 100 | 0 | 34.66 | -26.68 | 18.6 |
| 125 | 0 | 80 | 65 | 65 | 100 | 5.99 | -0.23 | -1.89 |

Tabelle 1b

| Index | G [%] | dL* | da* | db* | dE* | dE [%] |
|---|---|---|---|---|---|---|
| 13 | 22.8 | -0.78 | -1.97 | -1.14 | 2.41 | 28.66 |
| 118 | 12.73 | -0.89 | -1.8 | -1.43 | 2.47 | 16.4 |
| 124 | 8.969 | -0.75 | -0.06 | 0.68 | 1.01 | 4.75 |
| 12 | 7.611 | -0.01 | -0.1 | 0.4 | 0.41 | 1.64 |
| 123 | 7.543 | -0.82 | 0.02 | 0.41 | 0.92 | 3.61 |
| 128 | 6.495 | -0.78 | -1.96 | -1 | 2.33 | 7.92 |
| 109 | 6.189 | -0.17 | -1.1 | -2.12 | 2.39 | 7.74 |
| 85 | 6.181 | 0.1 | -0.96 | -3.14 | 3.28 | 10.61 |
| 113 | 3.448 | -0.59 | -0.48 | 0.16 | 0.78 | 1.4 |
| 121 | 2.363 | -0.46 | -0.99 | -2.05 | 2.32 | 2.87 |
| 39 | 1.686 | 0 | 0.1 | -0.16 | 0.19 | 0.17 |
| 114 | 0 | 0.21 | -1.36 | -1.08 | 1.75 | 0 |
| 125 | 0 | -1.2 | 0.58 | -0.16 | 1.34 | 0 |

Tabelle 1c

| Gewichteter Mittelwert | QL | Qa | Qb | QE | dE [%] |
|---|---|---|---|---|---|
| über 128 Farbelemente | 0.58 | 1.1 | 0.96 | 1.91 | 100 |

Die weiter vorne beschriebene, im folgenden als Methode 1 bezeichnete Methode zur Zuordnung der einzelnen Bildpunkte zu den individuellen, durch die Farbelemente der Testelementanordnung gegebenen realen Farbraumbereichen ist relativ rechenintensiv. Gemäss einem weiteren vorteilhaften Aspekt der Erfindung kann dies dadurch erheblich vereinfacht werden, dass eine grössere Anzahl von "virtuellen" Farbraumbereichen $VFRB_j$ definiert wird, die den gesamten CMYK-Farbraum gleichmässig ausfüllen. Beispielsweise können mit je 16 unterschiedlichen Werten für C, M, Y und K 65536 virtuelle Farbräume festgelegt werden. Für jeden dieser 65536 virtuellen Farbräume wird nun derjenige reale Farbraumbereich $FRB_i$ der Testelementanordnung ermittelt, in welchen der virtuelle Farbraumbereich (am besten) passt, und in einer entsprechenden Zuordnungstabelle abgelegt, welche die Indices j der virtuellen Farbraumbereiche mit den Indices i der realen Farbraumbereiche verknüpft. Anstatt für z.B. 3 Millionen Bildpunkte des Bilds den nächstliegenden realen Farbraumbereich zu bestimmen, muss nur für 65536 virtuelle Farbraumbereiche der nächstliegende reale Farbraumbereich bestimmt werden. Zudem muss dies für eine Testelementanordnung nur einmal erfolgen.

Für jeden Bildpunkt kann nun der zugehörige reale Farbraumbereich $FRB_i$ sehr einfach dadurch ermittelt

7

werden, dass zunächst aus den CMYK-Werten des Bildpunkts der Index j des zugehörigen virtuellen Farbraumbereichs VFRB$_j$ gemäss der Formel

$$j = (C / 16) + (M / 16) * 16 + (Y / 16) * 256 + (K / 16) * 4096 \qquad \text{(Formel 4)}$$

berechnet (reine Ganzzahlwerte und -Operationen) und dann anhand des Index j der Index i des realen Farbraumbereichs aus der Zuordnungstabelle entnommen wird. Die dazu erforderlichen Berechnungen sind vergleichsweise schnell durchzuführen. Es entstehen bei dieser Methode zwar zusätzliche Quantisierungsfehler. Sofern die Anzahl der virtuellen Farbraumbereiche viel grösser als die Anzahl der realen Farbraumbereiche ist, sind diese jedoch vernachlässigbar. Diese Erfindungsvariante wird im folgenden als Methode 2 bezeichnet.

Wenn das Gewicht eines Bildpunkts auf die benachbarten Farbraumbereiche verteilt werden soll, so kann dies ebenfalls mit der Hilfe einer Tabelle erfolgen. Es werden z.B. für den Vierfarbendruck die 16 nächstliegenden reellen Farbraumbereiche für jeden virtuellen Farbraumbereich gesucht und die Referenzen dazu zusammen mit den Verteilungskoeffizienten gespeichert. Die Zuordnung jedes Bildpunkts erfolgt dann durch eine einfache und daher schnelle Operation, basierend auf den tabellierten Daten.

Eine weitere, im folgenden als Methode 3 bezeichnete Variante besteht darin, für jedes zu druckende Bild eine individuelle Testelementanordnung zu verwenden, deren Farbelemente bzw. durch diese festgelegten Farbraumbereiche auf das jeweilige Bild abgestimmt sind. Dazu wird ein grosser Satz von z.B. 8*8*8 = 4096 den gesamten CMYK-Farbraum gleichmässig ausfüllenden "virtuellen" Farbraumbereichen definiert und die Zuordnung der Bildpunkte zu diesen virtuellen Farbraumbereichen analog der vorigen Methode 2 aus den CMYK-Werten der Bildpunkte durch eine einfache Indexberechnung (reine Ganzzahlwerte und -Operationen) durchgeführt:

$$i = (C / 32) + (M / 32) * 8 + (Y / 32) * 64 + (K / 32) * 512 \qquad \text{(Formel 5)}$$

Wegen des Platzbedarfs und Messaufwands soll die reale Testelementanordnung natürlich nicht so eine grosse Anzahl von Farbelementen umfassen. Etwa 100 Farbelemente genügen für die Praxis, sofern sie den vom Bild belegten Farbraum ausreichend abdecken. Es werden daher zunächst für alle virtuellen Farbraumbereiche die Gewichte gemäss den vorstehend aufgezeigten Kriterien ermittelt. Dann werden aus den virtuellen Farbraumbereichen diejenigen z.B. 100 Farbraumbereiche ausgewählt, welche das grösste Gewicht erhalten haben. Diese ausgewählten Farbraumbereiche werden dann als reale Testelementanordnung verwendet. Mit dieser Methode werden normalerweise nicht alle Bildpunkte zur Qualitätsanalyse ausgewertet, dies kann aber vernachlässigt werden. Der Vorteil ist, dass die realen Farbraumbereiche optimal auf die häufigsten Farben im Bild abgestimmt sind und eine reale Testelementanordnung mit sehr wenigen Farbelementen gewählt werden kann. Der Nachteil ist, dass für jedes Bild eine individuelle Testelementanordnung definiert und gedruckt werden muss.

Im folgenden wird erläutert, wie die an der mitgedruckten Testelementanordnung gemessenen Farbabweichungen dL*$_i$, da*$_i$ und db*$_i$ der einzelnen Farbelemente FE$_i$ zur Farbregelung des Druckprozesses ausgewertet werden können.

In einem vorbereitenden Schritt wird für jeden Farbraumbereich FRB$_i$ die sogenannte Sensitivitätsmatrix [S$_i$] bestimmt. Diese Sensitivitätsmatrizen beschreiben (im Falle des Offset-Drucks) den Einfluss der Schichtdickenänderungen aller am Druckprozess beteiligten Druckfarben auf den CIE-L*a*b* - Zentrums-Farbwert des Farbraumbereichs FRB$_i$ bezogen auf den konkreten Druckprozess. Die Koeffizienten bzw. Elemente jeder Sensitivitätsmatrix [S$_i$] bestehen in an sich bekannter Weise aus den Ableitungen der L*a*b*-Werte für den Farbraumbereich FRB$_i$ nach den Schichtdicken, am Beispiel von vier Druckfarben C, M, Y und K also:

$$[S_i] = \begin{bmatrix} dL^*_i/dD_C & dL^*_i/dD_M & dL^*_i/dD_Y & dL^*_i/dD_K \\ da^*_i/dD_C & da^*_i/dD_M & da^*_i/dD_Y & da^*_i/dD_K \\ db^*_i/dD_C & db^*_i/dD_M & db^*_i/dD_Y & db^*_i/dD_K \end{bmatrix} \qquad \text{(Formel 6)}$$

Darin bedeuten dD$_C$, dD$_M$, dD$_Y$ und dD$_K$ Schichtdickenänderungen der vier Druckfarben C, M, Y und K und dL*$_i$, da*$_i$ und db*$_i$ die daraus resultierenden Farbwertänderungen für den Farbraumbereich FRB$_i$ bzw. das Farbelement

FE$_i$.

Mit [S$_i$] gilt für jedes Farbelement FE$_i$ der Testelementanordnung der bekannte Zusammenhang:

$$(dF_i) = [S_i] * (dD) \qquad \text{(Formel 7)}$$

Darin bedeuten (dF$_i$) einen Farbdifferenz(spalten)vektor mit den Komponenten dL$^*_i$, da$^*_i$ und db$^*_i$ und (dD) einen Schichtdickedifferenz(spalten)vektor mit den Komponenten dD$_C$, dD$_M$, dD$_Y$ und dD$_K$.

Die Bestimmung der Sensitivitätsmatrizen ist an sich bekannt. Sie können experimentell ermittelt werden, indem die Testelementanordnung einmal mit nominellen Schichtdicken und für alle beteiligten Druckfarben je einmal mit abweichender Schichtdicke gedruckt wird. Die Farbmesswerte an den Farbelementen der so gedruckten Testelementanordnung bestimmen dann die Koeffizienten der einzelnen Sensitivitätsmatrizen [S$_i$].

Die Koeffizienten der Sensitivitätsmatrizen können auch mit einem Offset-Druck-Farbmodell berechnet werden. Dies kann basierend auf den Volltonspektralcharakteristiken der beteiligten Druckfarben und deren Flächendeckungen erfolgen, indem für eine vorgegebene Rasterkombination das resultierende Spektrum berechnet wird und aus dem Spektrum die CIE-L$^*$ a$^*$ b$^*$ Farbwerte berechnet werden. Der Vorgang wird wiederholt, wobei die Schichtdicke in der Modellrechnung für jede Druckfarbe um z.B. 1% erhöht wird. Dies erfolgt für alle beteiligten Druckfarben und es können, wie bei der experimentellen Ermittlung, die Koeffizienten der Sensitivitätsmatrizen [S$_i$] berechnet werden.

Es ist ein wesentlicher Aspekt der Erfindung, dass für alle Farbelemente FE$_i$ der (realen) Testelementanordnung resp. alle Farbraumbereiche FRB$_i$ die zugehörige Sensitivitätsmatrix [S$_i$] ermittelt wird.

Im Offset-Druck wird die Farbgebung durch Veränderung der Schichtdicke der am Druckprozess beteiligten Druckfarben gesteuert. Für die Farbsteuerung bzw. Farbkorrektur sind daher diejenigen Schichtdickenänderungen (Schichtdickekorrekturen) für die beteiligten Druckfarben zu suchen (zu berechnen), welche die an den Farbelementen der Testelementanordnung gemessenen Farbabweichungen am weitesten reduzieren. Da dies im allgemeinen nicht für alle Farbelemente gleichzeitig möglich ist, werden die Schichtdickekorrekturen in an sich bekannter Weise mit der Massgabe gesucht, dass der verbleibende Restfarbfehler über alle Farbelemente minimal wird. Dazu werden die bekannten Methoden der Ausgleichsrechnung herangezogen.

Da die Schichtdicke der Druckfarben für alle Bildpositionen oder zumindest für alle Bildpositionen einer Druckzone nur gleich verändert werden kann, ist es grundsätzlich erforderlich, dass die Korrektur nach einer Gewichtung erfolgt. Erfindungsgemäss werden dazu die den einzelnen Farbraumbereichen bzw. Farbelementen i der Testelementanordnung zugeordneten Gewichte G$_i$ herangezogen. Es macht z.B. keinen Sinn, dass ein auf der Testelementanordnung festgestellter Farbfehler minimiert wird, wenn diese Farbe im Bild gar nicht vorkommt, also das Gewicht dieses Farbraumbereichs null ist. Diese unnötige Korrektur könnte auf Kosten des Korrekturvermögens von anderen Farbraumbereichen mit einem hohen Gewichtsanteil gehen.

Um die Gewichte G$_i$ der einzelnen Farbelemente FE$_i$ der Testelementanordnung in die weiteren Berechnungen einzubeziehen, wird für jedes Farbelement FE$_i$ eine gewichtete Sensitivitätsmatrix [S$_{iw}$] nach der Formel

$$[S_{iw}] = G_i * [S_i] \qquad \text{(Formel 8)}$$

berechnet. In den folgenden Schritten werden dann nur noch diese gewichteten Sensitivitätsmatrizen [S$_{iw}$] verwendet.

Wenn die Farbtafel N Farbelemente enthält, ergibt sich mit Formel 6 und unter Verwendung der gewichteten Sensitivitätsmatrizen [S$_{iw}$] und der gewichteten Farbabweichungen (Formel 2) bzw. den durch diese gebildeten gewichteten Farbabweichungsvektoren (dF$_{1w}$) ein überbestimmtes Gleichungssystem

$$(dF_{1w}) = [S_{1w}] * (dD)$$

$$..........................................................$$

$$..........................................................$$

$$(dF_{iw}) = [S_{iw}] * (dD) \qquad\qquad (Formel\ 9)$$

$$..........................................................$$

$$..........................................................$$

$$(dF_{Nw}) = [S_{Nw}] * (dD)$$

das nach dem Schicktdickekorrekturvektor (dD) aufzulösen ist mit der Nebenbedingung, dass der (gewichtete) Restfarbfehler minimal wird. Wenn die N gewichteten Farbabweichungsvektoren $(dF_{1w})$ ....$(dF_{Nw})$ zu einem Spaltenvektor $(dF_w)$ mit N*3 Komponenten und die N gewichteten Sensitivitätsmatrizen $[S_{1w}]$ .... $[S_{Nw}]$ zu einer Matrix $[S_w]$ mit N*3 Zeilen und 4 Spalten zusammengefasst werden, lässt sich das Gleichungssystem der Formel 9 offensichtlich zur folgenden Matrizengleichung zusammenfassen:

$$(dF_w) = [S_w] * (dD) \qquad\qquad (Formel\ 10)$$

Diese Matrizengleichung ist nun mit der genannten Nebenbedingung $|(dF_w)|$ = Min! nach dem Schichtdickekorrekturvektor (dD) aufzulösen. Nach den Regeln der Ausgleichsrechnung ergibt sich die Lösung dafür durch die folgende Gleichung:

$$(dD) = [[S_w]^T * [S_w]]^{-1} * [S_w]^T * (dF_w) \qquad (Formel\ 11)$$

in welcher $[S_w]^T$ die zu $[S_w]$ transponierte Matrix und $[[S_w]^T * [S_w]]^{-1}$ die zum Produkt der beiden Matrizen $[S_w]^T$ und $[S_w]$ inverse Matrix bedeuten. Wenn das Matrizenprodukt $[[S_w]^T * [S_w]]^{-1} * [S_w]^T$ als Korrekturmatrix [Q] bezeichnet wird, lässt sich die Lösungsgleichung für den Schichtdickekorrekturvektor (dD) wie folgt vereinfacht anschreiben:

$$(dD) = [Q] * (dF_w) \qquad\qquad (Formel\ 12)$$

Dieser Schichtdickekorrekturvektor (dD) wird nun in den Offset-Druckprozess eingespeist, d.h. die Farbgebungsorgane der Offset-Druckmaschine werden in an sich bekannter Weise so verstellt, dass sich die gewünschten Schichtdickenänderungen ergeben.

Durch diese Farbschichtdickekorrektur (oder eine analoge Druckkennlinienkorrektur z.B. beim Inkjet Druck) kann nur der mittlere Bildfarbfehler minimiert werden, ein (idealerweise vemachlässigbar) kleiner Restfarbfehler verbleibt immer. Der nach der gemäss den vorstehenden Erläuterungen berechneten Korrektur (und nach deren Ausführung) zu erwartende (gewichtete) Restfarbfehler kann wie folgt vorausberechnet werden:

$$(\Delta F_{iw}) = (dF_{iw}) - [S_{iw}] * (dD) \qquad\qquad (Formel\ 13)$$

Darin bedeutet $(\Delta F_i)$ den Restfarbfehlervektor mit den Komponenten $\Delta L_i$, $\Delta a_i$ und $\Delta b_i$ für den Farbraumbereich $FRB_i$. Daraus ergibt sich der absolute Restfarbfehler $\Delta E_{iw}$ pro Farbraumbereich $FRB_i$ gemäss

$$\Delta E_{iw} = |(\Delta F_{iw})| \qquad\qquad (Formel\ 14)$$

Der mittlere (oder genauer gesamte) Restfarbfehlervektor ($\Delta F_w$) ergibt sich durch Summierung über alle N Farbraumbereiche $FRB_i$:

$$(\Delta F_w) = (\Delta \tilde{F_{1w}}) + (\Delta F_{2w}) + \dots\dots (\Delta F_{Nw}) \qquad\qquad (Formel\ 15)$$

Und schliesslich berechnet sich der gesamte absolute Restfarbfehler ($\Delta E_w$) durch Summierung der absoluten Restfarbfehler $\Delta E_{iw}$ pro Farbraumbereich $FRB_i$ über alle N Farbraumbereiche:

$$\Delta E_w = \Delta E_{1w} + \Delta E_{iw} + \dots\dots \Delta E_{Nw} \qquad\qquad (Formel\ 16)$$

Die gemäss Formel 14 und 15 berechneten Werte bilden das Farbqualitätsmass für das gesamte Bild nach der Durchführung der berechneten Schichtdickenkorrektur.

Der Offsetdruck hat die Eigenart, dass die Farbzuführung der bedruckten Fläche angepasst werden muss. Deshalb kann diese Farbzuführung in nach sogenannten Druckzonen unterteilten Bereichen von z.B. 3 cm Breite individuell erfolgen. Die üblichen Druckkontrollstreifen haben daher oft auf diese Zonen ausgerichtete Druckkontrollelemente. Aus Platzgründen kann normalerweise nicht für jede Druckzone eine eigene Testelementanordnung gemäss der Erfindung gedruckt werden. Vorteilhaft ist daher gemäss einem weiteren wichtigen Aspekt der Erfindung sowohl die Anordnung eines konventionellen Druckkontrollstreifens, der in konventioneller Weise zur Regelung der zonalen Farbhomogenität herangezogen wird, als auch einer zusätzlichen erfindungsgemässen Testelementanordnung, die auch streifenförmig ausgebildet sein kann und z.B. parallel zum konventionellen Druckkontrollstreifen platziert ist. Diese Testelementanordnung erlaubt dann eine überlagerte Qualitätsbeurteilung und Farbregelung des ganzen Bildes.

Die konventionellen Druckkontrollelemente können auch als Farbelemente der Testelementanordnung genutzt werden. Sie können auch zusammen mit den Farbelementen in einem Druckkontrollstreifen gemischt angeordnet werden. Die konventionellen Druckkontrollelemente wiederholen sich dann pro Druckzone oder zumindest mehrfach pro Bildbreite. Wenn genügend Platz vorhanden ist, kann pro Druckzone eine Testelementanordnung angebracht werden. Das ganze Bild mit der Grösse der Druckplatte wird in Teilbilder aufgeteilt, in diesem Fall pro Druckzone ein Teilbild. Diese Teilbilder werden im Sinne der voranstehenden Ausführungen als unabhängige Bilder beurteilt und farbkorrigiert. Mehr praktikabel ist die Aufteilung des Bildes in Teilbilder mit der Breite von je z.B. 4 Zonen. Bei der Aufteilung in Teilbilder kann auch mit einem einzigen, schmalen Druckkontrollstreifen gearbeitet werden; die in den Druckzonen der Teilbilder fehlenden Farbelemente der Testelementanordnung werden aus den Druckzonen der übrigen Teilbilder entnommen.

Die oben beschriebenen Verfahrensvarianten legen den CIE-L*a*b*-Farbraum zugrunde. Dieser ist ein empfindungsmässig gleichabständiger Farbraum und daher anderen Farbräumen vorzuziehen. Liegen die Farbwerte in einem anderen Farbraum vor, so werden diese vorzugsweise vor allen weiteren Berechnungen in den CIE-L*a*b*-Farbraum transformiert. Dies kann in an sich bekannter Weise z.B. mittels ICC-Profilen erfolgen.

An Stelle des ganzen Bildes können auch nur beliebig kleinere Bildbereiche für die Berechnungen (Gewichtszuordnung) herangezogen werden. Auch können unbedruckte Bildbereiche und Bereiche, die nur mit Text oder Strichgrafiken belegt sind, von der Bewertung ausgeschlossen werden.

Die oben beschriebenen Verfahrensvarianten beziehen sich auf den Vierfarbendruck. Sie sind aber auch auf beliebige Druckfarbenkombinationen anwendbar. Voraussetzung ist nur, dass die Testelementanordnung eine genügende Anzahl Farbelemente (Rasterkombinationen) enthält, die repräsentativ für die wichtigsten Rasterkombinationen im Bild sind. Dazu kann nach der Methode 3 eine individuelle Testelementanordnung generiert werden. Es kann auch ein Farbraum mit mehr als 4 Dimensionen benützt werden.

Es gibt standardisierte Farbtafeln, z.B. von ANSI IT8.7/3 oder ISO 12642. Diese haben den Vorteil, dass sie unabhängig vom zu druckenden Bild immer gleich sind. Die individuellen Farbtafeln können auf das aktuelle Bild optimiert werden, für den Sonderfarbendruck sind sie erforderlich. Es kann auch eine Standardfarbtafel mit einer individuellen Testelementanordnung kombiniert werden.

Die Farbkorrektur der oben beschriebenen Verfahrensvarianten beziehen sich rein beispielsweise auf die Schichtdickekorrektur, wie diese für den Offsetdruck charakteristisch ist. Für andere Druckverfahren wie z.B. den "Ink-Jet-Druck" ist eine Schichtdickekorrektur nicht möglich. Bei solchen Druckverfahren ist es jedoch möglich, die Druckkennlinien der beteiligten Farben durch Veränderung der "Punktzunahme" zur Farbkorrektur zu benützen. Auch diese Einwirkungen können durch entsprechende Sensitivitätsmatrizen für jeden Farbraumbereich beschrieben werden. Allgemein gesagt, beschreibt eine Sensitivitätsmatrix für den zugrundeliegenden Farbreproduktionsprozess im Gebiet des jeweiligen Farbraumbereichs den Zusammenhang zwischen inkrementellen Änderungen der Farbkorrektureinstellungen des Farbreproduktionsprozesses und den dadurch in der Farbreproduktion bewirkten Farbwertänderungen bezüglich des Beurteilungsfarbraums.

Wenn die Farbqualität trotz Korrektur ungenügend ist, können auch die an der zuletzt gedruckten Testelementanordnung gemessenen Farbwerte zur erneuten Farbprofilgenerierung genutzt werden, und basierend auf diesem neuen Profil können die CMYK-Bilddaten vor dem nächsten Ausdruck neu berechnet werden.

Zu Testzwecken kann das zu druckende Bild B nur mit den Farben, die in der Testelementanordnung enthalten sind, z.B. auf einem Bildschirm dargestellt werden. Für diese Bildschirmdarstellung sind die CMYK-Werte der einzelnen Bildpunkte durch die Farbwerte der Farbelemente, denen die Bildpunkte zugeordnet sind, zu ersetzen und diese Farbwerte sind in an sich bekannter Weise in den für die Bildschirmdarstellung benutzten Farbraum (üblicherweise RGB) zu transformieren. Diese Bildschirmdarstellung erlaubt eine rasche visuelle Beurteilung der zur Qualitätsmessung verwendeten "Ersatzfarben". Die Bildschirmdarstellung ist je nach Anzahl der Farbraumbereiche $FRB_i$ in der Testelementanordnung mehr oder weniger quantisiert.

Um diese Bildwiedergabe getreu der Gewichtung vorzunehmen, kann ein Bildpunkt auch aus der Superposition der Farbwerte mehrer realer Farbraumbereiche dargestellt werden. Dazu können die Tabellenwerte der in der weiter vorne beschriebenen Methode 2 definierten Verteilungskoeffizienten der 16 nächstliegenden realen Farbraumbereiche benutzt werden. Diese werden für diese Anwendung normalisiert, so dass deren Summe 1 beträgt. Die CIA-L\*a\*b\*-Farbwerte der realen Farbraumbereiche sind bekannt, sie werden auf CIE-X-Y-Z-Farbwerte umgerechnet und proportional zu den normalisierten Verteilungskoeffizienten summiert. Die Summe wird in einen mittleren CIE-L\*a\*b\*-Farbwert umgerechnet, und dieser wird dann in einen mittleren RGB-Farbwert transformiert. Es ist zu beachten, dass diese Berechnungen nicht für jeden Bildpunkt, sondern nur einmalig für jeden virtuellen Farbraumbereich ausgeführt werden müssen.

Weil die Anzahl der virtuellen Farbraumbereiche viel grösser als die Anzahl der realen Farbraumbereiche ist, ist die Bilddarstellung mit diesen mittleren Farbwerten weniger quantisiert, aber natürlich immer noch mehr als das Originalbild, das für 4 Farben je eine Abstufung von 256 Rasterwerten aufweisen kann ($256^4$ Farben).

Auch das im folgenden als Prüfbild PB bezeichnete, noch fehlerbehaftete gedruckte Bild lässt sich auf einem Bildschirm darstellen, ohne dass dessen Farbwerte in den einzelnen Bildpunkten gemessen werden müssen. Zuerst werden aus den originalen CMYK-Bilddaten der einzelnen Bildpunkte die entsprechenden CIE-L\*a\*b\*-Farbwerte für jeden Bildpunkt bestimmt. Zu jedem Bildpunktfarbwert wird nun aus dem zugeordneten (realen) Farbraumbereich dessen (durch Ausmessen der gedruckten Testelementanordnung bestimmter) CIE-dL\*da\*db\*-Farbfehler addiert. Aus den so konstruierten CIE-L\*a\*b\*-Bildpunktfarbwerten werden die entsprechenden RGB-Farbwerte bestimmt und damit das so konstruierte Prüfbild PB dargestellt. Natürlich sind die CIE-dL\*da\*db\*-Werte auch mit der oben genanten Quantisierung behaftet, da es sich aber normalerweise um kleine Anteile des Farbwertes handelt, sind diese nicht störend.

In analoger Weise kann auch das Ergebnis der gemäss vorstehenden Ausführungen ermittelten Farbkorrektur (also das nach deren Ausführung zu erwartende korrigierte Prüfbild KPB) vorausberechnet und auf einem Bildschirm dargestellt werden. Die Farbkorrektur wird mit Hilfe der Sensitivitätsmatrizen für jeden Farbraumbereich berechnet und vom an den einzelnen Farbelementen der Testelementanordnung gemessenen Farbfehler subtrahiert (vgl. Formel 13). Dann wird das korrigierte Prüfbild mit den Restfehlern auf analoge Weise wie das unkorrigierte Prüfbild dargestellt. Es ist zu beachten, dass durch eine Farbschichtdickekorrektur (oder eine entsprechende Druckkennlinienkorrektur beim Inkjet-Druck) nur der mittlere Farbfehler minimiert werden kann und daher die Kenntnis der Restfehler wichtig ist.

Auf die gleiche Art kann anstelle der berechneten auch eine durch den Benutzer beabsichtigte bzw. eingestellte Schichtdickekorrektur oder Druckkennlinienkorrektur bzw. deren Auswirkung vor der Ausführung der Korrektur auf dem Bildschirm gezeigt werden.

Zur besseren Darstellung der Farbunterschiede zwischen dem Ausgangsbild und dem durch den Druckprozess erzeugten Prüfbild kann eine gemischte Bilddarstellung gewählt werden. Z.B. kann das Bild in viele z.B. 256 Quadrate, deren jedes durch eine Diagonale geteilt wird, unterteilt werden. Die Bildpunkte oberhalb der Diagonale werden z.B. mit den Prüfbildfarbwerten und die Bildpunkte unterhalb der Diagonale mit den Farbwerten des Ausgangsbilds dargestellt. Zur besseren Erkennbarkeit der Farbunterschiede können diese auch z.B. mit dem Faktor 5 überhöht dargestellt werden.

Weil gemäss der Erfindung die Bilder selbst nicht ausgemessen werden müssen, entstehen auch keine (örtlichen) Positionierprobleme zwischen den Ausgangsbilddaten und den Prüfbilddaten, wie dies beim bekannten Verfahren der "Messung im Bild" der Fall ist.

Zur Farbqualitätsbeurteilung bzw. Farbsteuerung in einem Farbreproduktionsprozess, insbesondere einem Farbdruckprozess, wird zusammen mit einem zu reproduzierenden Bild eine mehrere Farbelemente enthaltende Testelementanordnung mitreproduziert, wobei für die Bildpunkte des Bilds und die Farbelemente der Testelementanordnung Farbkoordinatenwerte in einem Ausgangsfarbraum und für die Farbelemente der Testelementanordnung Sollfarbwerte in einem Beurteilungsfarbraum vorliegen. Die mitreproduzierte Testelementanordnung wird farbmetrisch ausgemessen, aus den gemessenen Farbwerten der Farbelemente werden deren Farbabweichungen gegenüber den entsprechenden Sollfarbwerten ermittelt, und aus den Farbabweichungen der Farbelemente werden ein Farbqualitätsmass für das reproduzierte Bild und/oder Farbkorrekturgrössen für den Farbreproduktionsprozess berechnet.

Der Ausgangsfarbraum (AFR) wird in eine grössere Anzahl von Farbraumbereichen unterteilt wird, deren jeder durch die Farbkoordinatenwerte seines Zentrums definiert ist, und die Testelementanordnung ist so zusammengesetzt, dass die Farbkoordinatenwerte der Farbelemente den Farbkoordinatenwerten der Zentren der Farbraumbereiche entsprechen. Zumindest für einen ausgewählten Teil der Bildpunkte des Bilds wird pro Bildpunkt derjenige Farbraumbereich als zugehörig bestimmt, dessen Zentrum im Ausgangsfarbraum den geringsten absoluten Abstand vom jeweiligen Bildpunkt aufweist.

Für jeden ausgewählten Bildpunkt wird ein Gewichtsbeitrag festgelegt und dem jeweils zugehörigen Farbraumbereich zugeordnet. Für jeden Farbraumbereich werden die diesem zugeordneten Gewichtsbeiträge der Bildpunkte zu einem Farbraumgewicht aufsummiert. Die an der Testelementanordnung ermittelten Farbabweichungen der Farbelemente werden jeweils mit dem Farbraumgewicht des zugeordneten Farbraumbereichs gewichtet.

Als Farbqualitätsmass für das reproduzierte Bild wird die Summe der so gewichteten Farbabweichungen über alle Farbelemente berechnet.

Für die Farbregelung wird für jeden Farbraumbereich eine Sensitivitätsmatrix ermittelt, welche für den zugrundeliegenden Farbreproduktionsprozess im Gebiet des jeweiligen Farbraumbereichs den Zusammenhang zwischen inkrementellen Änderungen der Farbkorrektureinstellungen des Farbreproduktionsprozesses und den dadurch in der Farbreproduktion bewirkten Farbwertänderungen bezüglich des Beurteilungsfarbraums beschreibt. Die für die Farbregelung erforderlichen Farbkorrekturgrössen werden mittels der Sensitivitätsmatrizen der Farbraumbereiche aus den ermittelten Farbabweichungen der Farbelemente und den Farbraumgewichten der Farbelemente mit der Massgabe berechnet, dass der Absolutwert der Summe der nach Ausführung der Farbkorrektur verbleibenden, mit den Farbraumgewichten gewichteten Farbabweichungen aller Farbelemente der Testelementanordnung minimal wird. Mit den so ermittelten Farbkorrekturgrössen wird dann die Farbkorrektur im Farbreproduktionsprozess ausgeführt.

Das Verfahren ist gegenüber der bekannten Methode der "Messung im Bild" wesentlich weniger aufwändig, liefert aber trotzdem gleichwertige Resultate.

**Patentansprüche**

1.  Verfahren zur Farbqualitätsbeurteilung in einem Farbreproduktionsprozess, insbesondere einem Farbdruckprozess, bei welchem Verfahren zusammen mit einem zu reproduzierenden Bild eine mehrere Testelemente enthaltende Testelementanordnung (FT) mitreproduziert wird, wobei für die Bildpunkte des Bilds (B) und die Testelemente der Testelementanordnung (FT) Farbkoordinatenwerte in einem Ausgangsfarbraum und für die Testelemente der Testelementanordnung Sollfarbwerte in einem Beurteilungsfarbraum vorliegen, und bei welchem Verfahren ferner die mitreproduzierte Testelementanordnung bezüglich des Beurteilungsfarbraums farbmetrisch ausgemessen wird, aus den gemessenen Farbwerten der Testelemente deren Farbabweichungen gegenüber den entsprechenden Sollfarbwerten ermittelt werden und aus den Farbabweichungen der Testelemente ein Farbqualitätsmass ($Q_L,Q_a,Q_b$) für das reproduzierte Bild berechnet wird,
    **dadurch gekennzeichnet,**
    **dass** der Ausgangsfarbraum (AFR) in eine grössere Anzahl von Farbraumbereichen ($FRB_i$) unterteilt wird, deren jeder durch die Farbkoordinatenwerte seines Zentrums definiert ist,
    **dass** eine Testelementanordnung (FT) mit einer der Anzahl von Farbraumbereichen ($FRB_i$) entsprechenden Anzahl von Farbelementen ($FE_i$) verwendet wird, wobei die Farbkoordinatenwerte der Farbelemente den Farbkoordinatenwerten der Zentren der Farbraumbereiche entsprechen,
    **dass** zumindest für einen ausgewählten Teil der Bildpunkte des Bilds (B) pro Bildpunkt (P) derjenige Farbraumbereich ($FRB_i$) als zugehörig bestimmt wird, dessen Zentrum im Ausgangsfarbraum (AFR) den geringsten Abstand vom jeweiligen Bildpunkt (P) aufweist,
    **dass** für den ausgewählten Teil der Bildpunkte des Bilds pro Bildpunkt (P) ein Gewichtsbeitrag ($G_{pi}$) festgelegt und dem jeweils zugehörigen Farbraumbereich ($FRB_i$) zugeordnet wird,
    **dass** für jeden Farbraumbereich ($FRB_i$) die diesem zugeordneten Gewichtsbeiträge ($G_{pi}$) der Bildpunkte (P) zu einem Farbraumgewicht ($G_i$) aufsummiert werden, **dass** die an der Testelementanordnung bezüglich des Beurteilungsfarbraums (BFR) gegenüber den Sollfarbwerten ermittelten Farbabweichungen ($dL^*_i,da^*_i,db^*_i$) der Farbelemente ($FE_i$) jeweils mit dem Farbraumgewicht ($G_i$) desjenigen Farbraumbereichs ($FRB_i$) gewichtet werden, dessen Zentrumsfarbkoordinatenwerte den Farbkoordinatenwerten des jeweiligen Farbelements ($FE_i$) entsprechen,

und **dass** als Farbqualitätsmass ($Q_L$,$Q_a$,$Q_b$) für das reproduzierte Bild die Summe der so gewichteten Farbabweichungen ($dL_{iw}$,$da_{iw}$,$db_{iw}$) über alle Farbelemente ($FE_i$) der Testelementanordnung (FT) berechnet wird.

2. Verfahren nach Anspruch 1, **dadurch gekennzeichnet, dass** als Farbqualitätsmass ($Q_E$) zusätzlich der Absolutbetrag der Summe der gewichteten Farbabweichungen ($dL_{iw}$,$da_{iw}$,$db_{iw}$) über alle Farbelemente ($FE_i$) berechnet wird.

3. Verfahren zur Farbregelung in einem Farbreproduktionsprozess, insbesondere einem Farbdruckprozess, bei welchem Verfahren zusammen mit einem zu reproduzierenden Bild eine mehrere Testelemente enthaltende Testelementanordnung mitreproduziert wird, wobei für die Bildpunkte des Bilds und die Testelemente der Testelementanordnung Farbkoordinatenwerte in einem Ausgangsfarbraum und für die Testelemente der Testelementanordnung Sollfarbwerte in einem Beurteilungsfarbraum vorliegen, und bei welchem Verfahren ferner die mitreproduzierte Testelementanordnung bezüglich des Beurteilungsfarbraums farbmetrisch ausgemessen wird, aus den gemessenen Farbwerten der Testelemente deren Farbabweichungen gegenüber den entsprechenden Sollfarbwerten ermittelt werden und aus den Farbabweichungen der Testelemente Farbkorrekturgrössen für den Farbreproduktionsprozess berechnet werden, **dadurch gekennzeichnet,**
   **dass** der Ausgangsfarbraum (AFR) in eine grössere Anzahl von Farbraumbereichen ($FRB_i$) unterteilt wird, deren jeder durch die Farbkoordinatenwerte seines Zentrums definiert ist,
   **dass** eine Testelementanordnung (FT) mit einer der Anzahl von Farbraumbereichen ($FRB_i$) entsprechenden Anzahl von Farbelementen ($FE_i$) verwendet wird, wobei die Farbkoordinatenwerte der Farbelemente den Farbkoordinatenwerten der Zentren der Farbraumbereiche entsprechen,
   **dass** zumindest für einen ausgewählten Teil der Bildpunkte des Bilds (B) pro Bildpunkt (P) derjenige Farbraumbereich ($FRB_i$) als zugehörig bestimmt wird, dessen Zentrum im Ausgangsfarbraum (AFR) den geringsten Abstand vom jeweiligen Bildpunkt (P) aufweist,
   **dass** für den ausgewählten Teil der Bildpunkte des Bilds pro Bildpunkt (P) ein Gewichtsbeitrag ($G_{pi}$) festgelegt und dem jeweils zugehörigen Farbraumbereich ($FRB_i$) zugeordnet wird,
   **dass** für jeden Farbraumbereich ($FRB_i$) die diesem zugeordneten Gewichtsbeiträge ($G_{pi}$) der Bildpunkte (P) zu einem Farbraumgewicht ($G_i$) aufsummiert werden,
   **dass** für jeden Farbraumbereich ($FRB_i$) eine Sensitivitätsmatrix ($[S_i]$) ermittelt wird, welche für den zugrundeliegenden Farbreproduktionsprozess im Gebiet des jeweiligen Farbraumbereichs ($FRB_i$) den Zusammenhang zwischen inkrementellen Änderungen der Farbkorrektureinstellungen des Farbreproduktionsprozesses und den **dadurch** in der Farbreproduktion bewirkten Farbwertänderungen bezüglich des Beurteilungsfarbraums (BFR) beschreibt,
   **dass** die Farbkorrekturgrössen ((dD)) mittels der Sensitivitätsmatrizen ($[S_i]$) der Farbraumbereiche ($FRB_i$) aus den ermittelten Farbabweichungen (($dF_i$)) der Farbelemente ($FE_i$) und den Farbraumgewichten ($G_i$) der Farbelemente ($FE_i$) mit der Massgabe berechnet werden, dass der Absolutwert der Summe der nach Ausführung der Farbkorrektur verbleibenden, mit den Farbraumgewichten gewichteten Farbabweichungen aller Farbelemente der Testelementanordnung minimal wird,
   und **dass** die durch die so ermittelten Farbkorrekturgrössen ((dD)) definierte Farbkorrektur im Farbreproduktionsprozess ausgeführt wird.

4. Verfahren nach Anspruch 3, **dadurch gekennzeichnet, dass** für jeden Farbraumbereich ($FRB_i$) durch Multiplikation der zugehörigen Sensitivitätsmatrix ($[S_i]$) mit dem zugehörigen Farbraumgewicht ($G_i$) eine gewichtete Sensitivitätsmatrix ($[S_{iw}]$) gebildet wird, und dass die Farbkorrekturgrössen ((dD)) mittels der gewichteten Sensitivitätsmatrizen ($[S_{iw}]$) der Farbraumbereiche ($FRB_i$) aus den ermittelten gewichteten Farbabweichungen ($dL^*_{iw}$,$da^*_{iw}$,$db^*_{iw}$) der Farbelemente ($FE_i$) berechnet werden.

5. Verfahren nach Anspruch 3 oder 4, **dadurch gekennzeichnet, dass** die Berechnung der Farbkorrekturgrössen ((dD)) nach den Methoden der Ausgleichsrechnung erfolgt.

6. Verfahren nach einem der vorangehenden Ansprüche, **dadurch gekennzeichnet, dass** als Beurteilungsfarbraum (BFR) ein empfindungsmässig gleichabständiger Farbraum, insbesondere der CIE-L*a*b*-Farbraum verwendet wird.

7. Verfahren nach einem der Ansprüche 3-6, **dadurch gekennzeichnet, dass** die Farbkorrekturgrössen Schichtdickenänderungen ((dD)) von Druckfarben sind.

8. Verfahren nach einem der Ansprüche 3-6, **dadurch gekennzeichnet, dass** die Farbkorrekturgrössen Änderungen der Reproduktionskennlinien des Farbreproduktionsprozesses sind.

9.  Verfahren nach einem der vorangehenden Ansprüche, **dadurch gekennzeichnet, dass** im Falle ungenügender Farbqualität anhand der gemessenen Farbwerte ($L^*_i$, $a^*_i$, $b^*_i$) der Farbelemente ($FE_i$) der Testelementanordnung (FT) ein neues Farbprofil für den Farbreproduktionsprozess erstellt und die Farbkoordinatenwerte (CMYK) der Bildpunkte (P) des Bilds (B) anhand dieses neuen Profils neu berechnet werden.

10. Verfahren nach einem der vorangehenden Ansprüche, **dadurch gekennzeichnet, dass** der Ausgangsfarbraum (AFR) in virtuelle Farbraumbereiche ($VFRB_j$) eingeteilt wird, deren Anzahl wesentlich grösser ist als die Anzahl der realen Farbraumbereiche ($FRB_i$), dass jeder virtuelle Farbraumbereich ($VFRB_j$) als zu demjenigen realen Farbraumbereich ($FRB_i$) zugehörig ermittelt wird, der ihn am besten abdeckt, und anhand der Farbkoordinatenwerte (CMYK) der Bildpunkte (P) berechnet wird, in welchem virtuellen Farbraumbereich ($VFRB_j$) jeder Bildpunkt liegt, und dass die einzelnen Bildpunkte (P) des Bilds (B) jeweils demjenigen realen Farbraumbereich ($FRB_i$) zugeordnet werden, zu welchem derjenige virtuelle Farbraumbereich ($VFRB_j$) gehört, in dem der betreffende Bildpunkt (P) liegt.

11. Verfahren nach einem der vorangehenden Ansprüche, **dadurch gekennzeichnet, dass** eine der farblichen Zusammensetzung des zu reproduzierenden Bilds (B) angepasste individuelle Testelementanordnung (FT) verwendet wird.

12. Verfahren nach einem der vorangehenden Ansprüche, **dadurch gekennzeichnet, dass** der Ausgangsfarbraum (AFR) in virtuelle Farbraumbereiche ($VFRB_j$) eingeteilt wird, deren Anzahl wesentlich grösser ist als die Anzahl der realen Farbraumbereiche ($FRB_i$), dass anhand der Farbkoordinatenwerte (CMYK) der Bildpunkte (P) des Bilds (B) berechnet wird, in welchem virtuellen Farbraumbereich ($VFRB_j$) jeder Bildpunkt liegt, dass für die Bildpunkte (P) ein Gewichtsbeitrag bestimmt und demjenigen virtuellen Farbraumbereich ($VFRB_j$) zugeordnet wird, in dem der jeweilige Bildpunkt (P) liegt, dass für jeden virtuellen Farbraumbereich ($VFRB_j$) die ihm zugeordneten Gewichtsbeiträge zu einem zugeordneten Gesamtgewicht summiert werden, dass aus den virtuellen Farbraumbereichen ($VFRB_j$) eine der Anzahl realer Farbraumbereiche ($FRB_i$) entsprechende Anzahl von virtuellen Farbraumbereichen mit den grössten zugeordneten Gesamtgewichten ausgewählt wird, und dass diese ausgewählten virtuellen Farbraumbereiche ($VFRB_j$) als reale Farbraumbereiche ($FRE_i$) verwendet und die Farbelemente ($FE_i$) der Testelementanordnung (FT) entsprechend ausgebildet werden.

13. Verfahren nach einem der vorangehenden Ansprüche, **dadurch gekennzeichnet, dass** nur die Bildpunkte (P) aus ausgewählten Bildbereichen zur Berechnung der Farbraumgewichte ($G_i$) herangezogen werden.

14. Verfahren nach einem der vorangehenden Ansprüche, **dadurch gekennzeichnet, dass** die Gewichtsbeiträge ($G_{pi}$) der in bildwichtigen Bereichen des Bilds (B) liegenden Bildpunkte (P) grösser gewählt werden als die Gewichtsbeiträge ($G_{pi}$) der übrigen Bildpunkte.

15. Verfahren nach einem der vorangehenden Ansprüche, **dadurch gekennzeichnet, dass** die Gewichtsbeiträge ($G_{pi}$) der Bildpunkte (P) des Bilds (B) abhängig von den Farbkoordinatenwerten (CMYK) der Bildpunkte (P) im Ausgangsfarbraum (AFR) unterschiedlich gewählt werden.

16. Verfahren nach einem der vorangehenden Ansprüche, **dadurch gekennzeichnet, dass** die Gewichtsbeiträge ($G_{pi}$) der in inhomogenen Bereichen des Bilds (B) liegenden Bildpunkte (P) geringer gewählt werden als die Gewichtsbeiträge ($G_{pi}$) der in homogenen Bildbereichen liegenden Bildpunkte.

17. Verfahren nach einem der vorangehenden Ansprüche, **dadurch gekennzeichnet, dass** die Gewichtsbeiträge ($G_{pi}$) der in grossen homogenen Bereichen des Bilds (B) liegenden Bildpunkte (P) begrenzt werden.

18. Verfahren nach einem der vorangehenden Ansprüche, **dadurch gekennzeichnet, dass** der Gewichtsbeitrag ($G_{pi}$) eines Bildpunkts (P) auf den zugeordneten Farbraumbereich ($FRB_i$) und auf die diesem nächstliegend benachbarten Farbraumbereiche aufgeteilt wird, wobei näherliegende Farbraumbereiche einen grösseren Gewichtsanteil erhalten als weiter entfernt liegende Farbraumbereiche.

19. Verfahren nach einem der vorangehenden Ansprüche, **dadurch gekennzeichnet, dass** falls die Sollfarbwerte der Farbelemente ($FE_i$) der Testelementanordnung (FT) in einem anderen als dem CIE-L\*a\*b\*-Farbraum vorliegen, diese Sollfarbwerte in den CIE-L\*a\*b\*-Farbraum transformiert und alle weiteren Berechnungen in diesem Farbraum durchgeführt werden.

20. Verfahren gemäss einem der vorangehenden Ansprüche, **dadurch gekennzeichnet, dass** bei Farbreproduktionsprozessen mit zonaler Farbsteuerung, insbesondere beim Offset-Druck, das zu druckende Bild (B) in eine Anzahl von Teilbildern aufgeteilt wird, die jeweils in einer Zone oder vorzugsweise in jeweils einer Gruppe von benachbarten Zonen liegen, und dass die Farbqualitätsbeurteilung und/oder Farbregelung für jedes Teilbild separat erfolgt.

21. Verfahren gemäss einem der vorangehenden Ansprüche, **dadurch gekennzeichnet, dass** bei Farbreproduktionsprozessen mit zonaler Farbsteuerung, insbesondere beim Offset-Druck, die Farbregelung in zwei überlagerten Phasen erfolgt, wobei in der untergeordneten ersten Phase unabhängig vom zu druckenden Bild die Farbhomogenität über alle Zonen geregelt wird und in der überlagerten zweiten Phase die vom zu druckenden Bild abhängige eigentliche Farbkorrektur durchgeführt wird.

22. Verfahren gemäss einem der vorangehenden Ansprüche, **dadurch gekennzeichnet, dass** als Farbreproduktionsprozess der Vierfarben-, Mehrfarben- oder SonderfarbenDruck, insbesondere der Offset-Druck oder der Inkjet-Druck verwendet wird.

23. Verfahren gemäss einem der vorangehenden Ansprüche, **dadurch gekennzeichnet, dass** das zu reproduzierende Bild (B) auf einem grafischen Anzeigegerät, speziell einem Bildschirm, dargestellt wird, wobei für jeden Bildpunkt (P) die Sollfarbwerte des ihm zugeordneten Farbraumbereichs (FRB$_i$) für die Darstellung verwendet werden.

24. Verfahren gemäss einem der vorangehenden Ansprüche, **dadurch gekennzeichnet, dass** ein noch fehlerbehaftetes reproduziertes Prüfbild (PB) auf einem grafischen Anzeigegerät, speziell einem Bildschirm, dargestellt wird, wobei für jeden Bildpunkt (P) aus den Farbkoordinatenwerten (CMYK) des Bilds (B) die entsprechenden Farbwerte (L*,a*,b*) im Beurteilungsfarbraum (BFR) bestimmt werden, diese Farbwerte jeweils mit den an den Farbelementen (FE$_i$) der Testelementanordnung (FT) gemessenen Farbabweichungen (dL*$_i$, da*$_i$,db*$_i$) verrechnet werden und die so verrechneten Farbwerte für die Darstellung verwendet werden.

25. Verfahren gemäss einem der vorangehenden Ansprüche, **dadurch gekennzeichnet, dass** ein nach Ausführung einer Farbkorrektur zu erwartendes reproduziertes korrigiertes Prüfbild (KPB) auf einem grafischen Anzeigegerät, speziell einem Bildschirm, dargestellt wird, wobei für jeden Bildpunkt (P) aus den Farbkoordinatenwerten (CMYK) des Bilds (B) die entsprechenden Farbwerte (L*,a*,b*) im Beurteilungsfarbraum (BFR) bestimmt werden, aus den berechneten oder manuell gewählten Farbkorrekturgrössen ((dD)) anhand der Sensitivitätsmatrizen ([S$_i$]) die zugehörigen Farbwertkorrekturwerte ([S$_i$]*(dD)) bestimmt werden, die Farbwerte der Bildpunkte jeweils mit den an den Farbelementen (FE$_i$) der Testelementanordnung (FT) gemessenen Farbabweichungen (dL*$_i$,da*$_i$,db*$_i$) und den zugehörigen Farbwertkorrekturwerten ([S$_i$]* (dD)) korrigiert werden, und die so korrigierten Farbwerte für die Darstellung verwendet werden.

26. Verfahren gemäss den Ansprüchen 23 bis 25, **dadurch gekennzeichnet, dass** das zu reproduzierende Bild (B) und das noch fehlerbehaftete Prüfbild (PB) oder das nach einer berechneten oder vorgegebenen Farbkorrektur zu erwartende korrigierte Prüfbild (KPB) gleichzeitig auf einem grafischen Anzeigegerät, insbesondere einem Bildschirm dargestellt werden, wobei vorzugsweise die Darstellung örtlich deckungsgleich gemischt erfolgt und dabei in abwechselnden Bildbereichen nur die Bildpunkte des zu reproduzierenden Bilds (B) bzw. des noch fehlerbehafteten Prüfbilds (PB) oder des korrigierten Prüfbilds (KPB) dargestellt werden.

27. Verfahren nach Anspruch 26, **dadurch gekennzeichnet, dass** Farbunterschiede zwischen den Bildpunkten der dargestellten Bilder (B, PB, KPB) überhöht dargestellt werden.

**Claims**

1. Process for colour quality evaluation in a colour reproduction process, particularly a colour printing process, wherein a test element arrangement (FT) containing a plurality of test elements is reproduced along with an image to be reproduced, wherein for the image points of the image (B) and the test elements of the test element arrangement (FT) there are colour coordinate values in a source colour space and for the test elements of the test element arrangement there are target colour values in an evaluation colour space, and in which process, furthermore, the test element arrangement also reproduced is colorimetrically measured with respect to the evaluation colour space, wherein the colour deviations of the test elements with respect to the corresponding target colour values are determined from the measured colour values of the test elements and a colour quality measure ($Q_L$, $Q_a$, $Q_b$) is calculated for the reproduced image from the colour deviations of the test elements, **characterised in that** the source colour space (AFR) is subdivided into a larger number of colour space areas (FRB$_i$), each of which is defined by the colour coordinate values of its centre,

**in that** a test element arrangement (FT) is used with a number of colour elements ($FE_i$) corresponding to the number of colour space areas ($FRB_i$), wherein the colour coordinate values of the colour elements correspond to the colour coordinate values of the centres of the colour space areas,

**in that** at least for a selected proportion of the image points of the image (B) the colour space area ($FRB_i$) whose centre in the source colour space (AFR) is the smallest distance from the respective image point (P) is determined to be associated with that image point (P),

**in that** for the selected proportion of the image points of the image a weight contribution ($G_{pi}$) is fixed for each image point (P) and assigned to the respectively associated colour space area ($FRB_i$),

**in that** for each colour space area ($FRB_i$) the weight contributions ($Gp_i$) of the image points (P) assigned thereto are added up to produce a colour space weight ($G_i$),

**in that** the colour deviations ($dL^*_i$, $da^*_i$, $db^*_i$) of the colour elements ($FE_i$) determined on the test element arrangement with respect to the evaluation colour space (BFR) with the target colour values are weighted with the colour space weight ($G_i$) of the respective colour space area ($FRB_i$) whose centre colour coordinate values correspond to the colour coordinate values of the respective colour element ($FE_i$),

and **in that** the sum of the thus weighted colour deviations ($dL_{iw}$, $da_{iw}$, $db_{iw}$) over all colour elements ($FE_i$) of the test element arrangement (FT) is calculated as a colour quality measure ($Q_L$, $Q_a$, $Q_b$).

2. Process according to claim 1, **characterised in that** in addition the absolute amount of the sum of the weighted colour deviations ($dL_{iw}$, $da_{iw}$, $db_{iw}$) over all colour elements ($FE_i$) is calculated as the colour quality measure ($Q_E$).

3. Process for colour control in a colour reproduction process, particularly a colour printing process, wherein a test element arrangement containing a plurality of test elements is produced along with an image to be reproduced, wherein for the image points of the image and the test elements of the test element arrangement there are colour coordinate values in a source colour space and for the test elements of the test element arrangement there are target colour values in an evaluation colour space, and in which process, furthermore, the test element arrangement also produced is colorimetrically measured with respect to the evaluation colour space, wherein the colour deviations of the test elements with respect to the corresponding target colour values are determined from the measured colour values of the test elements and colour correction values are calculated from the colour deviations of the test elements for the colour reproduction process,

**characterised in that**

the source colour space (AFR) is subdivided into a larger number of colour space areas ($FRB_i$), each of which is defined by the colour coordinate values of its centre,

**in that** a test element arrangement (FT) is used with a number of colour elements ($FE_i$) corresponding to the number of colour space areas ($FRB_i$), wherein the colour coordinate values of the colour elements correspond to the colour coordinate values of the centres of the colour space areas,

**in that** at least for a selected proportion of the image points of the image (B) the colour space area ($FRB_i$) whose centre in the source colour space (AFR) is the smallest distance from the respective image point (P) is determined to be associated with that image point (P),

**in that** for the selected proportion of the image points of the image a weight contribution ($Gp_i$) is fixed for each image point (P) and assigned to the respectively associated colour space area ($FRB_i$),

**in that** for each colour space area ($FRB_i$) the weight contributions ($Gp_i$) of the image points (P) assigned thereto are added up to produce a colour space weight ($G_i$),

**in that** for each colour space area ($FRB_i$) a sensitivity matrix ($[S_i]$) is determined which describes, for the fundamental colour reproduction process, in the region of the respective colour space area ($FRB_i$), the correlation between incremental changes in the colour correction settings of the colour reproduction process and the colour value changes thereby effected in the colour reproduction with respect to the evaluation colour space (BFR),

**in that** the colour correction values ((dD)) are calculated by means of the sensitivity matrices ($[S_i]$) of the colour space areas ($FRB_i$) from the determined colour deviations (($dF_i$)) of the colour elements ($FE_i$) and the colour space weights ($G_i$) of the colour elements ($FE_i$) with the proviso that the absolute value of the sum of the colour deviations of all colour elements of the test element arrangement weighted with the colour space weights which remain after carrying out the colour correction is minimal,

and **in that** the colour correction defined by the thus determined colour correction values ((dD)) is realised in the colour reproduction process.

4. Process according to claim 3, **characterised in that** for each colour space area ($FRB_i$) a weighted sensitivity matrix ($[S_{iw}]$) is formed by multiplying the associated sensitivity matrix ($[S_i]$) with the associated colour space weight ($G_i$), and **in that** the colour correction values ((dD)) are calculated by means of the weighted sensitivity matrices ($[S_{iw}]$)

of the colour space areas (FRB$_i$) from the determined weighted colour deviations (dL*$_{iw}$, da*$_{iw}$, db*$_{iw}$) of the colour elements (FE$_i$).

5. Process according to claim 3 or 4, **characterised in that** the calculation of the colour correction values ((dD)) is carried out according to the methods of compensation calculation.

6. Process according to one of the preceding claims, **characterised in that** an equidistant colour space, particularly the CIE-L*a*b* colour space, is used as the evaluation colour space (BFR).

7. Process according to one of the claims 3 - 6, **characterised in that** the colour correction values are layer thickness modifications ((dD)) of inks.

8. Method according to one of the claims 3 - 6, **characterised in that** the colour correction values are modifications of the characteristic reproduction curves of the colour reproduction process.

9. Process according to one of the preceding claims, **characterised in that** in the case of insufficient colour quality a new colour profile is established for the colour reproduction process by reference to the measured colour values (L*$_i$, a*$_i$, b*$_i$) of the colour elements (FE$_i$) of the test element arrangement (FT) and the colour coordinate values (CMYK) of the image points (P) of the image (B) are calculated again by reference to this new profile.

10. Process according to one of the preceding claims, **characterised in that** the source colour space (AFR) is divided into virtual colour space areas (VFRB$_j$), the number of which is substantially greater than the number of real colour space areas (FRB$_i$), **in that** each virtual colour space area (VFRB$_j$) is determined as being associated with the real colour space area (FRB$_i$) which best covers it, and by reference to the colour coordinate values (CMYK) of the image points (P) it is determined in which virtual colour space area (VFRB$_j$) each image point lies, and **in that** the individual image points (P) of the image (B) are respectively assigned to the real colour space area (FRB$_i$) to which the virtual colour space area (VFRB$_j$) in which the relevant image point (P) lies belongs.

11. Process according to one of the preceding claims, **characterised in that** an individual test element arrangement (FT) adapted to the colour composition of the image (B) to be reproduced is used.

12. Process according to one of the preceding claims, **characterised in that** the source colour space (AFR) is divided into virtual colour space areas (VFRB$_j$), the number of which is substantially greater than the number of real colour space areas (FRB$_i$), **in that** by reference to the colour coordinate values (CMYK) of the image points (P) of the image it is calculated in which virtual colour space area (VFRB$_j$) each image point lies, **in that** a weight contribution is determined for the image points (P) and assigned to the virtual colour space area (VFRB$_j$) in which the relevant image point (P) lies, **in that** for each virtual colour space area (VFRB$_j$) the weight contributions assigned thereto are added to form a total assigned weight, **in that** from the virtual colour space areas (VFRB$_j$) a number of virtual colour space areas with the greatest assigned total weights corresponding to the number of real colour space areas (FRB$_i$) is chosen, and **in that** these selected virtual colour space areas (VFRB$_j$) are used as real colour space areas (FRB$_i$) and the colour elements (FE$_i$) of the test element arrangement (FT) are correspondingly formed.

13. Process according to one of the preceding claims, **characterised in that** only the image points (P) from selected image areas are used for calculating the colour space weights (G$_i$).

14. Process according to one of the preceding claims, **characterised in that** the weight contributions (G$_{pi}$) of the image points (P) lying in important areas of the image (B) are selected so as to be greater than the weight contributions (G$_{pi}$) of the remaining image points.

15. Process according to one of the preceding claims, **characterised in that** the weight contributions (G$_{pi}$) of the image points (P) of the image (B) are selected so as to be different in dependence upon the colour coordinate values (CMYK) of the image points (P) in the source colour space (AFR).

16. Process according to one of the preceding claims, **characterised in that** the weight contributions (G$_{pi}$) of the image points (P) lying in non-homogeneous areas of the image (B) are selected so as to be lower than the weight contributions (G$_{pi}$) of the image points lying in homogenous image areas.

17. Process according to one of the preceding claims, **characterised in that** the weight contributions (G$_{pi}$) of the image

points (P) lying in large homogenous areas of the image (B) are limited.

18. Process according to one of the preceding claims, **characterised in that** the weight contribution ($Gp_i$) of an image point (P) is divided over the assigned colour space area ($FRB_i$) and the neighbouring colour space areas lying close thereto, wherein closer lying colour space areas have a greater weight proportion than colour space areas lying further away.

19. Process according to one of the preceding claims, **characterised in that** if the target colour values of the colour elements ($FE_i$) of the test element arrangement (FT) are in a colour space other than the CIE-L*a*b* colour space these target colour values are transformed into the CIE-L*a*b* colour space and all further calculations are carried out in this colour space.

20. Process according to one of the preceding claims, **characterised in that** in colour reproduction processes with zonal colour control, particularly offset printing, the image (B) to be printed is divided into a number of sub-images, each lying in a zone or preferably in a respective group of neighbouring zones, and **in that** the colour quality evaluation and / or colour control takes place separately for each sub-image.

21. Process according to one of the preceding claims, **characterised in that** in colour reproduction processes with zonal colour control, particularly offset printing, the colour control takes place in two overlapping phases, wherein in the subordinate first phase the colour homogeneity is controlled over all zones independently of the image to be printed and in the superordinate second phase the actual colour correction dependent upon the image to be printed is carried out.

22. Process according to one of the preceding claims, **characterised in that** four-colour, multicolour or special colour printing, particularly offset printing or inkjet printing, is used as the colour reproduction process.

23. Process according to one of the preceding claims, **characterised in that** the image (B) to be reproduced is represented on a graphic display device, especially a screen, wherein for each image point (P) the target colour values of the colour space area ($FRB_i$) assigned thereto are used for the representation.

24. Process according to one of the preceding claims, **characterised in that** a reproduced test image (PB) still containing errors is represented on a graphic display device, especially a screen, wherein for each image point (P) the corresponding colour values (L*, a*, b*) in the evaluation colour space (BFR) are determined from the colour coordinate values (CMYK) of the image (B), these colour values are balanced with the colour deviations ($dL^*_i$, $da^*_i$, $db^*_i$) measured on the colour elements ($FE_i$) of the test element arrangement (FT) and the thus balanced colour values are used for the representation.

25. Process according to one of the preceding claims, **characterised in that** a reproduced, corrected test image (KPB) to be expected after carrying out a colour correction is represented on a graphic display device, especially a screen, wherein for each image point (P) the corresponding colour values (L*, a*, b*) in the evaluation colour space (BFR) are determined from the colour coordinate values (CMYK) of the image (B), the associated colour value correction values ($[S_i]^*(dD)$) are determined from the calculated or manually selected colour correction values ((dD)) by reference to the sensitivity matrices ($[S_i]$), the colour values of the image points are corrected with the colour deviations ($dL^*_i$, $da^*_i$, $db^*_i$) measured on the colour elements ($FE_i$) of the test element arrangement and the associated colour value correction values ($[S_i]^*(dD)$) and the thus corrected colour values are used for the representation.

26. Process according to claims 23 to 25, **characterised in that** the image (B) to be reproduced and the test image (PB) still containing errors or the corrected test image (KPB) to be expected after a calculated or pre-specified colour correction are simultaneously shown on a graphic display device, especially a screen, wherein the representation is preferably realised in a mixed way with local coincidence and thereby in alternating image areas only the image points of the image (B) to be reproduced and of the test image (PB) still containing errors or of the corrected test image (KPB) are shown.

27. Process according to claim 26, **characterised in that** colour differences between the image points of the represented images (B, PB, KPB) are represented with super-elevation.

**EP 1 525 981 B1**

**Revendications**

1. Procédé d'évaluation de la qualité des couleurs dans un processus de reproduction de couleurs, en particulier dans un processus d'impression en couleurs, procédé selon lequel un agencement de points de test (FT) contenant plusieurs points de test est reproduit en même temps qu'une image à reproduire, dans lequel, pour les points-images de l'image (B) et les points de test de l'agencement de points de test (FT), des valeurs de coordonnées chromatiques sont présentes dans un espace chromatique initial et, pour les points de test de l'agencement de points de test, des valeurs chromatiques consignes sont présentes dans un espace chromatique d'évaluation, procédé dans lequel, en outre, l'agencement de points de test reproduit en même temps est mesuré par colorimétrie par rapport à l'espace chromatique d'évaluation, dans lequel, à partir des valeurs chromatiques des points de test mesurées, les écarts chromatiques de ceux-ci sont déterminés par rapport aux valeurs chromatiques consignes correspondantes et, à partir des écarts chromatiques des points de test, une échelle de qualité chromatique ($Q_L$, $Q_a$, $Q_b$) est calculée pour l'image reproduite,
   **caractérisé en ce que**
   l'espace chromatique initial (AFR) est divisé en un plus grand nombre de zones d'espaces chromatiques ($FRB_i$) dont chacune est définie par les valeurs de coordonnées des couleurs de son centre,
   **en ce qu'**un agencement de points de test (FT), avec un nombre de points de couleur ($FE_i$) correspondant au nombre de zones d'espaces chromatiques ($FRB_i$) est utilisé, les valeurs de coordonnées chromatiques des points de couleur correspondant aux valeurs de coordonnées chromatiques des centres des zones d'espaces chromatiques,
   **en ce qu'**au moins pour une partie sélectionnée des points-images de l'image (B) par point-image (P), on détermine la zone d'espaces chromatiques ($FRB_i$) associée comme celle dont le centre dans l'espace chromatique initial (AFR) présente la distance la plus faible par rapport au point-image concerné (P),
   **en ce que** pour la partie sélectionnée des points-images de l'image (B) par point-image (P), on détermine une pondération ($G_{pi}$) et on l'associe à la zone d'espaces chromatiques ($FRB_i$) respectivement associée,
   **en ce que** pour chaque zone d'espaces chromatiques ($FRB_i$), les pondérations ($G_{pi}$) des points-images (P) associés à celle-ci sont additionnées pour donner un poids d'espace chromatique ($G_i$),
   **en ce que** les écarts des couleurs ($dL^*_i$, $da^*_i$, $db^*_i$) des points de couleurs ($FE_i$) déterminés dans l'agencement de points de test concernant l'espace chromatique d'évaluation (BFR) par rapport aux valeurs chromatiques consignes sont respectivement pondérés avec le poids d'espace chromatique ($G_i$) de la zone d'espaces chromatiques ($FRB_i$) dont les valeurs de coordonnées chromatiques au centre correspondent aux valeurs de coordonnées chromatiques du point de couleurs concerné ($FE_i$),
   et **en ce que** la somme des écarts des couleurs ainsi pondérés ($dL^*_{iw}$, $da^*_{iw}$, $db^*_{iw}$) sur tous les points de couleurs ($FE_i$) de l'agencement de points de test (FT) est calculée comme échelle de qualité chromatique ($Q_L$, $Q_a$, $Q_B$) pour l'image reproduite.

2. Procédé selon la revendication 1, **caractérisé en ce que**, en plus, la valeur absolue de la somme des écarts des couleurs pondérés ($dL^*_{iw}$, $da^*_{iw}$, $db^*_{iw}$) sur tous les points de couleurs ($FE_i$) est calculée comme échelle de qualité chromatique ($Q_E$).

3. Procédé de réglage des couleurs dans un processus de reproduction de couleurs, en particulier dans un processus d'impression en couleurs, procédé selon lequel un agencement de points de test contenant plusieurs points de test est reproduit en même temps qu'une image à reproduire, dans lequel, pour les points-images de l'image et les points de test de l'agencement de points de test, des valeurs de coordonnées chromatiques sont présentes dans un espace chromatique initial et, pour les points de test de l'agencement de points de test, des valeurs chromatiques consignes sont présentes dans un espace chromatique d'évaluation, procédé dans lequel, en outre, l'agencement de points de test reproduit en même temps est mesuré par colorimétrie par rapport à l'espace chromatique d'évaluation, dans lequel, à partir des valeurs chromatiques des points de test mesurées, les écarts de couleurs de ceux-ci sont déterminés par rapport aux valeurs chromatiques consignes correspondantes et, à partir des écarts des couleurs des points de test, des paramètres de correction des couleurs sont calculés pour le processus de reproduction de couleurs,
   **caractérisé en ce que**
   l'espace chromatique initial (AFR) est divisé en un plus grand nombre de zones d'espaces chromatiques ($FRB_i$) dont chacune est définie par les valeurs de coordonnées chromatiques de son centre,
   **en ce qu'**un agencement de points de test (FT), avec un nombre de points de couleur ($FE_i$) correspondant au nombre de zones d'espaces chromatiques ($FRB_i$) est utilisé, les valeurs de coordonnées chromatiques des points de couleur correspondant aux valeurs de coordonnées chromatiques des centres des zones d'espaces chromatiques,

**en ce qu'**au moins pour une partie sélectionnée des points-images de l'image (B) par point-image (P), on détermine la zone d'espaces chromatiques (FRB$_i$) associée comme celle dont le centre dans l'espace chromatique initial (AFR) présente la distance la plus faible par rapport au point-image concerné (P),

**en ce que** pour la partie sélectionnée des points-images de l'image par point-image (P), on détermine une pondération (G$_{pi}$) et on l'associe à la zone d'espaces chromatiques (FRB$_i$) respectivement associée,

**en ce que** pour chaque zone d'espaces chromatiques (FRB$_i$), les apports de poids (G$_{pi}$) des points-images (P) associés à celle-ci sont additionnés pour donner un poids d'espace chromatique (G$_i$),

**en ce que** pour chaque zone d'espaces chromatiques (FRB$_i$), on détermine une matrice de sensibilité ([S$_i$]) qui, pour le processus de reproduction de couleurs de base dans le domaine de la zone d'espaces chromatiques correspondante (FRB$_i$), décrit le rapport entre les variations incrémentales des réglages de correction des couleurs du processus de reproduction de couleurs et les variations des valeurs chromatiques ainsi effectuées pendant la reproduction des couleurs concernant l'espace chromatique d'évaluation (BFR),

**en ce que** les paramètres de correction des couleurs ((dD)) sont calculés à l'aide de la matrice de sensibilité ([S$_i$]) des zones d'espaces chromatiques (FRB$_i$) à partir des écarts chromatiques ((dF$_i$)) déterminés des points de couleurs (FE$_i$) et des poids d'espace chromatique (G$_i$) des points de couleurs (FE$_i$) en considérant que la valeur absolue de la somme des écarts chromatiques restants après l'exécution de la correction des couleurs, pondérés avec les poids d'espace chromatique de tous les points de couleurs de l'agencement de points de test, est minimale,

et **en ce que** la correction des couleurs définie par les paramètres de correction des couleurs ((dD)) ainsi déterminés est exécutée pendant le processus de reproduction de couleurs.

4. Procédé selon la revendication 3, **caractérisé en ce que**, pour chaque zone d'espaces chromatiques (FRB$_i$), on forme une matrice de sensibilité pondérée ([S$_{iw}$]) en multipliant la matrice de sensibilité correspondante ([S$_i$]) par le poids d'espace chromatique correspondant (G$_i$) et **en ce que** les paramètres de correction des couleurs ((dD)) sont calculés à l'aide de la matrice de sensibilité pondérée ([S$_{iw}$]) des zones d'espaces chromatiques (FRB$_i$) à partir des écarts des couleurs pondérés déterminés (dL*$_{iw}$, da*$_{iw}$, db*$_{iw}$) des points de couleurs (FE$_i$).

5. Procédé selon la revendication 3 ou 4, **caractérisé en ce que** le calcul des paramètres de correction des couleurs ((dD)) est effectué selon les méthodes de calcul de compensation.

6. Procédé selon l'une quelconque des revendications précédentes, **caractérisé en ce qu'**un espace chromatique sensiblement équidistant, en particulier l'espace chromatique CIE-L*a*b* est utilisé comme espace chromatique d'évaluation (BFR).

7. Procédé selon l'une quelconque des revendications 3 à 6, **caractérisé en ce que** les paramètres de correction des couleurs sont des variations d'épaisseur de couches ((dD)) de couleurs d'impression.

8. Procédé selon l'une quelconque des revendications 3 à 6, **caractérisé en ce que** les paramètres de correction des couleurs sont des variations de courbes de reproduction du processus de reproduction de couleurs.

9. Procédé selon l'une quelconque des revendications précédentes, **caractérisé en ce que**, dans le cas d'une qualité des couleurs insuffisante, on élabore un nouveau profil chromatique pour le processus de reproduction de couleurs à l'aide des valeurs chromatiques mesurées (L*$_j$, a*$_j$, b*$_j$) des points de couleurs (FE$_i$) de l'agencement de points de test (FT) et on calcule de nouveau les valeurs de coordonnées chromatiques (CMYK) des points-images (P) de l'image (B) à l'aide de ce nouveau profil.

10. Procédé selon l'une quelconque des revendications précédentes, **caractérisé en ce que** l'espace chromatique initial (AFR) est divisé en zones virtuelles d'espaces chromatiques (VFRB$_j$) dont le nombre est sensiblement plus grand que le nombre de zones réelles d'espaces chromatiques (FRB$_i$), **en ce que** chaque zone virtuelle d'espaces chromatiques (VFRB$_j$) est déterminée comme étant associée à la zone réelle d'espaces chromatiques (FRB$_i$) qui la recouvre le mieux, et à l'aide des valeurs de coordonnées chromatiques (CMYK) des points-images (P), on calcule dans quelle zone virtuelle d'espaces chromatiques (VFRB$_j$) se trouve chaque point-image, et **en ce que** les points-images individuels (P) de l'image (B) sont associés chacun à la zone réelle d'espaces chromatiques (FRB$_i$) à laquelle appartient la zone virtuelle d'espaces chromatiques (VFRB$_j$) dans laquelle se trouve le point-image concerné (P).

11. Procédé selon l'une quelconque des revendications précédentes, **caractérisé en ce que** l'on utilise un agencement de points de test (FT) individuel adapté à la composition chromatique de l'image à reproduire (B).

12. Procédé selon l'une quelconque des revendications précédentes, **caractérisé en ce que** l'espace chromatique initial (AFR) est divisé en zones virtuelles d'espaces chromatiques (VFRB$_j$) dont le nombre est sensiblement plus grand que le nombre de zones réelles d'espaces chromatiques (FRB$_i$), **en ce que**, à l'aide des valeurs de coordonnées chromatiques (CMYK) des points-images (P) de l'image (B), on calcule dans quelle zone virtuelle d'espaces chromatiques (VFRB$_j$) se trouve chaque point-image, et **en ce qu'**une pondération est déterminée pour les points-images (P) et associée à la zone virtuelle d'espaces chromatiques (VFRB$_j$) dans laquelle se trouve le point-image concerné (P), **en ce que**, pour chaque zone virtuelle d'espaces chromatiques (VFRB$_j$), les pondérations qui lui sont associées sont additionnées pour donner un poids total associé, **en ce qu'**un nombre de zones virtuelles d'espaces chromatiques correspondant au nombre de zones réelles d'espaces chromatiques (FRB$_i$) avec les poids totaux associés les plus importants est sélectionné à partir des zones virtuelles d'espaces chromatiques (VFRB$_j$), et **en ce que** des zones virtuelles d'espaces chromatiques (VFRB$_j$) sélectionnées sont utilisées comme zones réelles d'espaces chromatiques (FRB$_i$) et les points de couleurs (FE$_i$) de l'agencement de points de test (FT) sont formés de manière appropriée.

**13.** Procédé selon l'une quelconque des revendications précédentes, **caractérisé en ce que** l'on se sert uniquement des points-images (P) provenant de zones d'images sélectionnées pour calculer les poids d'espaces chromatiques (Gi).

**14.** Procédé selon l'une quelconque des revendications précédentes, **caractérisé en ce que** les pondérations (G$_{pi}$) des points-images (P) se trouvant dans des zones de l'image (B) importantes pour l'image sont sélectionnés pour être supérieurs aux pondérations (G$_{pi}$) des autres points-images.

**15.** Procédé selon l'une quelconque des revendications précédentes, **caractérisé en ce que** les pondérations (G$_{pi}$) des points-images (P) de l'image (B) sont sélectionnées différemment en fonction des valeurs de coordonnées chromatiques (CMYK) des points-images (P) dans l'espace chromatique initial (AFR).

**16.** Procédé selon l'une quelconque des revendications précédentes, **caractérisé en ce que** les pondérations (G$_{pi}$) des points-images (P) se trouvant dans des zones non homogènes de l'image (B) sont moins sélectionnées que les pondérations (G$_{pi}$) des points-images se trouvant dans des zones homogènes de l'image.

**17.** Procédé selon l'une quelconque des revendications précédentes, **caractérisé en ce que** les pondérations (G$_{pi}$) des points-images (P) se trouvant dans des grandes zones homogènes de l'image (B) sont limitées.

**18.** Procédé selon l'une quelconque des revendications précédentes, **caractérisé en ce que** la pondération (G$_{pi}$) d'un point-image (P) est divisé entre la zone d'espaces chromatiques (FRB$_i$) associée et les zones d'espaces chromatiques le plus proches de celle-ci, les zones d'espaces chromatiques plus proches ayant une composante de poids plus importante que les zones d'espaces chromatiques situées plus loin.

**19.** Procédé selon l'une quelconque des revendications précédentes, **caractérisé en ce que**, dans le cas où les valeurs chromatiques consignes des points de couleurs (FE$_i$) de l'agencement de points de test (FT) se trouvent dans un espace chromatique autre que l'espace chromatique CIE-L*a*b*, ces valeurs chromatiques consignes sont transformées dans l'espace chromatique CIE-L*a*b* et tous les autres calculs sont effectués dans cet espace chromatique.

**20.** Procédé selon l'une quelconque des revendications précédentes, **caractérisé en ce que**, dans les processus de reproduction de couleurs avec un réglage des couleurs par zone, en particulier l'impression offset, l'image à imprimer (B) est divisée en un certain nombre de parties-images qui se trouvent dans une zone ou, de préférence dans un groupe de zones adjacentes, et **en ce que** l'évaluation de la qualité des couleurs et/ou le réglage des couleurs se fait séparément.

**21.** Procédé selon l'une quelconque des revendications précédentes, **caractérisé en ce que**, dans les processus de reproduction de couleurs avec un réglage des couleurs par zone, en particulier l'impression offset, le réglage des couleurs se fait en deux phases superposées, l'homogénéité des couleurs étant réglée sur toutes les zones indépendamment de l'image à imprimer pendant la première phase subordonnée et la correction des couleurs proprement dite dépendante de l'image à imprimer étant réalisée pendant la seconde phase principale.

**22.** Procédé selon l'une quelconque des revendications précédentes, **caractérisé en ce que** l'on utilise comme processus de reproduction de couleurs la quadrichromie, la polychromie, l'impression en couleurs spéciales, en particulier l'impression offset ou l'impression à jet d'encre.

**23.** Procédé selon l'une quelconque des revendications précédentes, **caractérisé en ce que** l'image à reproduire (B) est représentée sur un dispositif d'affichage graphique, en particulier un écran, les valeurs chromatiques consignes de la zone d'espaces chromatiques (FRB$_i$) qui lui est associée étant utilisées, pour chaque point-image (P), pour la représentation.

**24.** Procédé selon l'une quelconque des revendications précédentes, **caractérisé en ce qu'**une image d'essai (PB) reproduite comportant encore des erreurs est représentée sur un dispositif d'affichage graphique en particulier un écran, les valeurs chromatiques correspondantes (L\*, a\*, b\*) étant déterminées dans l'espace chromatique d'évaluation (BFR) à partir des valeurs de coordonnées chromatiques (CMYK) de l'image (B), pour chaque point-image (P), ces valeurs chromatiques étant compensées avec les écarts des couleurs (dL\*$_i$, da\*$_i$, db\*$_i$) mesurés dans les points de couleurs (FE$_i$) de l'agencement de points de test (FT) et les valeurs chromatiques ainsi compensées étant utilisées pour la représentation.

**25.** Procédé selon l'une quelconque des revendications précédentes, **caractérisé en ce qu'**une image d'essai (KPB) corrigée reproduite prévue après l'exécution d'une correction des couleurs est représenté sur un dispositif d'affichage graphique en particulier un écran, les valeurs chromatiques correspondantes (L\*, a\*, b\*) étant déterminées, pour chaque point-image (P), dans l'espace chromatique d'évaluation (BFR) à partir des valeurs de coordonnées chromatiques (CMYK) de l'image (B), les valeurs de correction des couleurs correspondantes (IS$_i$]\*(dD)) sont déterminées à partir des paramètres de correction des couleurs (dD)) calculés ou sélectionnés manuellement à l'aide de la matrice de sensibilité ([S$_i$]), les valeurs chromatiques des points-images sont corrigées avec les écarts des couleurs (dL\*$_i$, da\*$_i$, db\*$_i$) mesurés dans les points de couleurs (FE$_i$) de l'agencement de points de test (FT) et les valeurs de correction des couleurs correspondantes ([S$_i$]\*(dD)), et les valeurs chromatiques ainsi corrigées sont utilisées pour la représentation.

**26.** Procédé selon les revendications 23 à 25, **caractérisé en ce que** l'image à reproduire (B) et l'image d'essai (PB) comportant encore des erreurs ou l'image d'essai (KPB) corrigée prévue après l'exécution d'une correction des couleurs calculée ou prédéterminée sont représentées simultanément sur un dispositif d'affichage graphique, en particulier un écran, la représentation se faisant suivant un recouvrement local mélangé et seuls les points-images de l'image à reproduire (B) ou de l'image d'essai (PB) comportant encore des erreurs ou de l'image d'essai (KPB) corrigée sont représentés dans des zones d'images alternantes.

**27.** Procédé selon la revendication 26, **caractérisé en ce que** les différences de couleurs entre les points-images des images représentées (B, PB, KPB) sont réhaussées.

CMYK-Bilddaten der Bildpunkte
des zu druckenden Bilds

Zuordnung der Bildpunkte P zu
den Farbraumbereichen FRB$_i$
anhand der CMYK-Bilddaten

Bestimmung des Gewichtsbeitrags G$_{pi}$ der Bildpunkte P zu
den Farbraumbereichen FRB$_i$

Bestimmung der Farbraumgewichte G$_i$ als Summe der Gewichtsbeiträge G$_{pi}$ pro Farbraumbereich FRB$_i$

Aufteilung des CMYK-Farbraums
in Farbraumbereiche FRB$_i$

Farbtafel FT mit Farbelementen
FE$_i$ entsprechend den Farbraumbereichen FRB$_i$

CMYK-Werte und Farbsollwerte
der Farbelemente FE$_i$ im CIE-
L*a*b*-Farbraum

Druck des Bilds B anhand
der CMYK-Bilddaten

Druck der Farbtafel anhand der
CMYK-Werte der Farbelemente FE$_i$

Messung der Farbwerte L*$_i$, a*$_i$,
b*$_i$ der Farbelemente FE$_i$

Berechnung Farbabweichungen
dL*$_i$, da*$_i$, db*$_i$ der gemessenen
Farbwerte von den Sollwerten
der Farbelemente FE$_i$

Berechnung des Farbqualitätsmasses für das Bild durch Summierung der gewichteten Farbabweichungen dL*$_{iw}$, da*$_{iw}$, db*$_{iw}$
über alle Farbraumbereiche
FRB$_i$

Gewichtung der Farbabweichungen dL*i, da*i, db*i mit den
Farbraumgewichten G$_i$ der zugeordneten Farbraumbereiche
FRB$_i$

**Fig. 1**

| CMYK-Bilddaten der Bildpunkte des zu druckenden Bilds | Aufteilung des CMYK-Farbraums in Farbraumbereiche FRB$_i$ |

Farbtafel FT mit Farbelementen FE$_i$ entsprechend den Farbraumbereichen FRB$_i$

CMYK-Werte und Farbsollwerte der Farbelemente FE$_i$ im CIE-L*a*b*-Farbraum

Zuordnung der Bildpunkte P zu den Farbraumbereichen FRB$_i$ anhand der CMYK-Bilddaten

Bestimmung des Gewichtsbeitrags G$_{pi}$ der Bildpunkte P zu den Farbraumbereichen FRB$_i$

Bestimmung der Sensitivitätsmatrix [S$_i$] für jeden Farbraumbereich FRB$_i$

Bestimmung der Farbraumgewichte G$_i$ als Summe der Gewichtsbeiträge G$_{pi}$ pro Farbraumbereich FRB$_i$

Druck des Bilds B anhand der CMYK-Bilddaten

Druck der Farbtafel anhand der CMYK-Werte der Farbelemente FE$_i$

Gewichtung der Sensitivitätsmatrizen [S$_i$] mit den Farbraumgewichten G$_i$ der zugeordneten Farbraumbereiche FRB$_i$ -> [S$_{iw}$]

Gewichtung der Farbabweichungen dL*$_i$, da*$_i$, db*$_i$ mit den Farbraumgewichten G$_i$ der zugeordneten Farbraumbereiche FRB$_i$ -> dL*$_{iw}$, da*$_{iw}$, db*$_{iw}$

Messung der Farbwerte L*$_i$, a*$_i$, b*$_i$ der Farbelemente FE$_i$

Berechnung Farbabweichungen dL*$_i$, da*$_i$, db*$_i$ der gemessenen Farbwerte von den Sollwerten der Farbelemente FE$_i$

Berechnung der Farbkorrekturwerte als Schichtdickenkorrekturen dD$_C$, dD$_M$, dD$_Y$, dD$_K$ aus den gewichteten Farbabweichungen dL*$_{iw}$, da*$_{iw}$, db*$_{iw}$ aller Farbelemente FE$_i$ und den gewichteten Sensitivitätsmatrizen [S$_{iw}$] durch Ausgleichsrechnung mit der Massgabe, den verbleibenden Gesamtrestfarbfehler zu minimieren.

Durchführung der Farbkorrektur anhand der berechneten Schichtdickenkorrekturwerte

## Fig. 2